# EUROPEAN PATENT SPECIFICATION

(11) **EP 2 364 764 B1**
(45) Date of publication and mention of the grant of the patent: **18.07.2012**
(21) Application number: 11250160.6
(22) Date of filing: 11.02.2011
(51) Int. Cl.: B01D 46/24, B01J 23/63, B01J 35/02, B01J 35/04, B01J 37/00, B01J 37/02, C04B 38/00, B01D 46/00

(54) **Exhaust gas purifying device and exhaust gas purifying method**
Abgasreinigungsvorrichtung und Abgasreinigungsverfahren
Dispositif de purification de gaz d'échappement et procédé de purification de gaz d'échappement

(30) Priority: 16.02.2010 JP 2010030843
(43) Date of publication of application: 14.09.2011
(73) Proprietor: NGK Insulators, Ltd., Nagoya-City, Aichi Pref. 467-8530 (JP)
(72) Inventor: Goto, Chika, Nagoya City Aichi-ken, 467-8530 (JP); Yamashita, Masataka, Nagoya City Aichi-ken, 467-8530 (JP); Miyairi, Yukio, Nagoya City Aichi-ken, 467-8530 (JP)
(74) Representative: Paget, Hugh Charles Edward

(56) References cited:
- EP-A1- 1 974 798
- EP-A2- 1 985 352
- WO-A1-01/12961
- US-A1- 2007 077 190

## Description

### BACKGROUND OF THE INVENTION

### Field of the Invention

The present invention relates to an exhaust gas purifying device and an exhaust gas purifying method. More particularly, it relates to an exhaust gas purifying device which can suitably be used for purification of an exhaust gas of a direct injection gasoline engine, and an exhaust gas purifying method using the device.

### Description of the Related Art

From the viewpoints of terrestrial environment protection and resource saving, lowering of fuel expenses of vehicles is demanded. As to a gasoline engine mainly for use in a car, use of a direct injection gasoline engine for directly injecting a fuel is promoted to improve fuel economy.

Heretofore, an exhaust gas discharged from the gasoline engine has been treated by an exhaust gas purifying device using a three way catalyst, an NOx reduction adsorber or the like. Moreover, in the conventional gasoline engine, a suction port fuel injection system has been employed. Therefore, soot (a particulate matter: PM) is less generated, and a special treatment for collecting a particulate matter is hardly required. However, the direct injection gasoline engine has a larger amount of the generated particulate matter as compared with the engine of the suction port fuel injection system and, accordingly, requires a countermeasure so that the generated particulate matter is not discharged to atmospheric air.

On the other hand, as a collecting filter for removing the particulate matter discharged from a diesel engine, a honeycomb structure is used. As such a honeycomb structure, a plugged honeycomb structure having plugged portions at predetermined positions in both end faces thereof (a wall flow type filter) is suggested (e.g., see Patent Document 1). Here, the plugged honeycomb structure comprises a honeycomb structure portion including porous partition walls arranged to form a plurality of cells which become through channels of a fluid (an exhaust gas and a purified gas) and an outer peripheral wall positioned at an outermost periphery thereof; and plugged portions arranged in 'open frontal areas of predetermined cells in an end face of the honeycomb structure portion on an inlet side of the fluid (the exhaust gas)' and 'open frontal areas of remaining cells in an end face of the honeycomb structure portion on an outlet side of the fluid (the purified gas)' in the honeycomb structure portion. According to such a honeycomb structure, the exhaust gas flows into the cells through the end face of the honeycomb structure on the inlet side of the exhaust gas, the exhaust gas which has flowed into the cells passes through the partition walls, and the exhaust gas (the purified gas) passing through the partition walls is discharged from the honeycomb structure through the end face thereof on the outlet side of the exhaust gas. Moreover, when the exhaust gas passes through the partition walls, the particulate matter contained in the exhaust gas is collected by the partition walls, and the exhaust gas is purified.

[Patent Document 1] JP-A-2003-254034

The document EP-A-1974798 describes an exhaust gas purifying system comprising a catalyst carrier upstream of a honeycomb particle filter.

### SUMMARY OF THE INVENTION

As a method of removing a particulate matter discharged from the above direct injection gasoline engine, there is suggested a method using a wall flow type filter for use in removing the particulate matter discharged from the above diesel engine. However, it is considered that when the wall flow type filter is mounted in addition to a conventional exhaust gas purifying device using a three way catalyst, an NOx reduction adsorber or the like, a pressure drop of an exhaust system increases, which causes a problem such as a lowering of an engine output.

To solve the above problem of the pressure drop increase, it is considered that the conventional exhaust gas purifying device is replaced with the wall flow type filter having the loaded three way catalyst. However, when a necessary amount of the three way catalyst is loaded onto partition walls of the wall flow type filter, pores of the partition walls are closed, which causes a problem that the pressure drop becomes excessively large.

Moreover, both ends of the wall flow type filter have plugged portions, whereby a heat capacity of both the ends is large, and a temperature at both the ends rises slowly. Therefore, there is a problem that the temperature cannot reach a catalyst activating temperature immediately after the start of the engine and that the purification of the exhaust gas by the three way catalyst becomes inadequate.

The present invention has been developed in view of such problems of the conventional technology, and an object thereof is to provide an exhaust gas purifying device which has a less increase of pressure drop and can purify an exhaust gas and collect a particulate matter with a high efficiency even immediately after start of an engine, and an exhaust gas purifying method using the device.

The present inventors have intensively considered achievement of the above object, and have eventually found that an exhaust gas purifying device comprising a honeycomb filter having a predetermined length and disposed on a downstream side of a flow through type honeycomb structure having a loaded three way catalyst can be installed right under an engine to achieve the above object, thereby completing the present invention.

That is, according to the present invention, an exhaust gas purifying device and an exhaust gas purifying method using the same are provided as follows.

An exhaust gas purifying device comprising: a honeycomb catalyst including a first honeycomb structure having partition walls arranged to form a plurality of cells which extend from an inflow side end face to an outflow side end face and become through channels of an exhaust gas, and a three way catalyst loaded onto the partition walls of the first honeycomb structure; a honeycomb filter including a second honeycomb structure having partition walls arranged to form a plurality of cells which extend from an inflow side end face to an outflow side end face and become through channels of the exhaust gas, and plugged portions arranged to alternately plug open ends of the cells of the second honeycomb structure so that the cells having the plugged open ends on an inflow side and the cells having the plugged open ends on an outflow side are alternately arranged; and a cylindrical can member having an inflow port connected to an engine exhaust manifold on an outlet side and an outflow port through which the exhaust gas flowing into the can member through the inflow port flows out of the can member and holding the honeycomb catalyst and the honeycomb filter in an internal gas passage thereof, wherein the honeycomb catalyst and the honeycomb filter are disposed in the can member so that the honeycomb catalyst is positioned on an inflow port side of the can member, the honeycomb filter is positioned on an outflow port side of the can member, the inflow side end face of the honeycomb catalyst faces the inflow port side of the can member and the outflow side end face of the honeycomb filter faces the outflow port side of the can member, and a length of the honeycomb catalyst along a cell extending direction is from 2.0 to 10.0 times a length of the honeycomb filter along the cell extending direction, the length of the honeycomb filter along the cell extending direction is from 0.1 to 0.5 time an outer diameter of the honeycomb filter, and a cell density of the honeycomb catalyst is larger than that of the honeycomb filter.

The exhaust gas purifying device according to the above [1], wherein the honeycomb catalyst and the honeycomb filter are arranged in the can member so that a central axis of the honeycomb catalyst along the cell extending direction and a central axis of the honeycomb filter along the cell extending direction are positioned on the same straight line.

The exhaust gas purifying device according to the above [1] or [2], wherein the honeycomb catalyst has 100 to 400 g of the three way catalyst loaded per liter of the honeycomb catalyst, and the honeycomb filter has 0 to 60 g of an oxidation catalyst loaded per liter of the honeycomb filter.

The exhaust gas purifying device according to any one of the above [1] to [3], wherein the honeycomb catalyst includes the first honeycomb structure in which a thickness of the partition walls is from 0.051 to 0.102 mm and the cell density is from 62.0 to 186 cells/cm², and the honeycomb filter includes the second honeycomb structure in which a thickness of the partition walls is from 0.127 to 0.508 mm and the cell density is from 7.75 to 46.5 cells/cm².

The exhaust gas purifying device according to any one of the above [1] to [4], wherein the honeycomb catalyst includes the first honeycomb structure in which a porosity of the partition walls is from 20 to 50%, and the honeycomb filter includes the second honeycomb structure in which a porosity of the partition walls is from 35 to 80% and an average pore diameter of the partition walls is from 7 to 40 µm.

The exhaust gas purifying device according to any one of the above [1] to [5], wherein the length of the honeycomb catalyst along the cell extending direction is from 0.5 to 1.5 times the outer diameter of the honeycomb catalyst.

The exhaust gas purifying device according to any one of the above [1] to [6], wherein a space disposed between the honeycomb catalyst and the honeycomb filter is from 1 to 30 mm.

An exhaust gas purifying method comprising the steps of installing the exhaust gas purifying device according to any one of the above [1] to [7] so that a distance from an outlet of an engine exhaust manifold to the outflow side end face of the honeycomb filter disposed in the can member on a downstream side thereof is 1 m or less, to purify an exhaust gas discharged through the engine exhaust manifold.

According to an exhaust gas purifying device of the present invention, a flow through type honeycomb catalyst having a loaded three way catalyst and a wall flow type honeycomb filter are disposed in a can member so that the honeycomb catalyst is positioned on an inflow port side of the can member, the honeycomb filter is positioned on an outflow port side of the can member, an inflow side end face of the honeycomb catalyst faces the inflow port side of the can member and an outflow side end face of the honeycomb filter faces the outflow port side of the can member, and a length of the honeycomb catalyst is from 2.0 to 10.0 times a length of the honeycomb filter, the length of the honeycomb filter is from 0.1 to 0.5 time an outer diameter of the honeycomb filter, and a cell density of the honeycomb catalyst is larger than that of the honeycomb filter, whereby the device has a less increase of pressure drop, and can purify an exhaust gas and collect a particulate matter with a high efficiency even immediately after start of a direct injection gasoline engine.

Moreover, according to an exhaust gas purifying method of the present invention of installing the exhaust gas purifying device of the present invention in the vicinity of a downstream side of an exhaust manifold of a direct injection gasoline engine (right under the exhaust manifold), the method has a less increase of pressure drop, and can purify an exhaust gas and collect a particulate matter with a high efficiency even immediately after start of the direct injection gasoline engine.

### BRIEF DESCRIPTION OF THE DRAWINGS

Fig. 1 is a sectional view schematically showing a constitution of one embodiment of an exhaust gas purifying device of the present invention and a section of the device including a central axis thereof along an extending direction of cells of a honeycomb catalyst and a honeycomb filter;
Fig. 2 is a perspective view schematically showing a honeycomb catalyst constituting the embodiment of the exhaust gas purifying device of the present invention;
Fig. 3 is a perspective view schematically showing a honeycomb filter constituting the embodiment of the exhaust gas purifying device of the present invention; and
Fig. 4 is an exemplary diagram explaining one embodiment of an exhaust gas purifying method of the present invention and showing a section of an exhaust gas purifying device including a central axis thereof along an extending direction of cells of a honeycomb catalyst and a honeycomb filter constituting the device.

### DESCRIPTION OF THE PREFERRED EMBODIMENT

Hereinafter, an embodiment of the present invention will be described, but it should be understood that the present invention is not limited to the following embodiment and includes appropriate modification, improvement or the like applied to the following embodiment based on ordinary knowledge of a person with ordinary skill in the art without departing from the scope of the present invention.

Exhaust Gas Purifying Device:

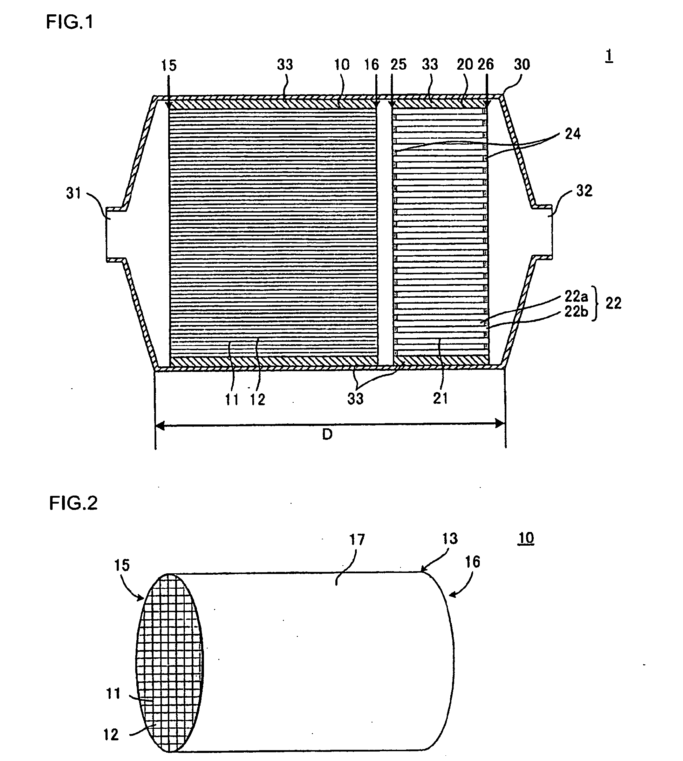

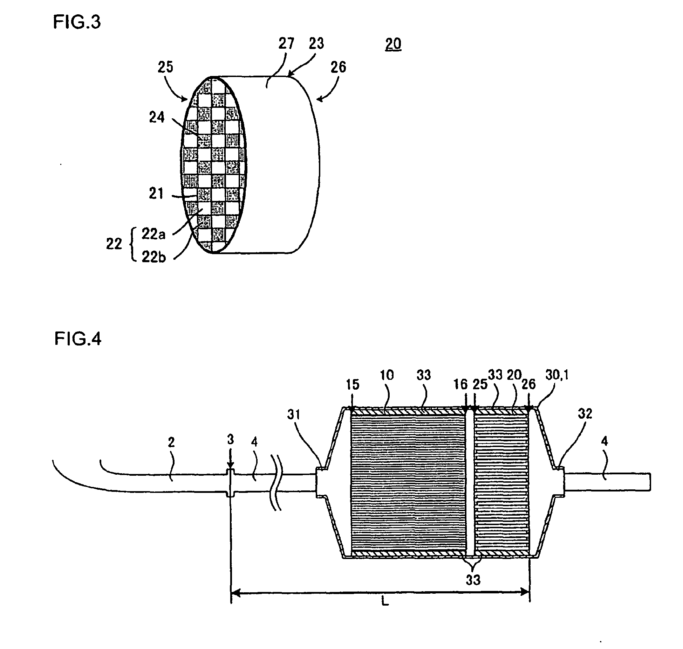

Fig. 1 is a sectional view showing a section of one embodiment of an exhaust gas purifying device of the present invention including a central axis thereof along a cell extending direction. Fig. 2 is a perspective view schematically showing a honeycomb catalyst constituting the embodiment of the exhaust gas purifying device of the present invention. Fig. 3 is a perspective view schematically showing a honeycomb filter constituting the embodiment of the exhaust gas purifying device of the present invention.

The embodiment of the exhaust gas purifying device of the present invention is an exhaust gas purifying device 1 comprising a honeycomb catalyst 10 including, as shown in Fig. 2, a first honeycomb structure 13 having partition walls 11 arranged to form a plurality of cells 12 which extend from an inflow side end face 15 to an outflow side end face 16 and become through channels of an exhaust gas, and a three way catalyst loaded onto the partition walls 11 of the first honeycomb structure 13; a honeycomb filter 20 including, as shown in Fig. 3, a second honeycomb structure 23 having partition walls 21 arranged to form a plurality of cells 22 which extend from an inflow side end face 25 to an outflow side end face 26 and become through channels of the exhaust gas, and plugged portions 24 arranged to alternately plug open ends of the cells 22 of the second honeycomb structure 23 so that the cells having the plugged open ends on an inflow side (outflow cells 22b) and the cells having the plugged open ends on an outflow side (inflow cells 22a) are alternately arranged; and a cylindrical can member 30 having, as shown in Fig. 1, an inflow port 31 connected to an engine exhaust manifold on an outlet side and an outflow port 32 through which the exhaust gas flowing into the can member through the inflow port 31 flows out of the can member and holding the honeycomb catalyst 10 and the honeycomb filter 20 in an internal gas passage thereof.

Moreover, as shown in Fig. 1, the honeycomb catalyst and the honeycomb filter constituting the exhaust gas purifying device 1 of the present embodiment are disposed in the can member 30 so that the honeycomb catalyst 10 is positioned on an inflow port 31 side of the can member 30, the honeycomb filter 20 is positioned on an outflow port 32 side of the can member 30, the inflow side end face 15 of the honeycomb catalyst 10 faces the inflow port 31 side of the can member 30 and the outflow side end face 26 of the honeycomb filter 20 faces the outflow port 32 side of the can member 30.

Moreover, in the exhaust gas purifying device of the present embodiment, a length of the honeycomb catalyst 10 along an extending direction of the cells 12 (hereinafter also referred to simply as 'the length of the honeycomb catalyst') is from 2.0 to 10.0 times a length of the honeycomb filter 20 along an extending direction of the cells 22 (hereinafter also referred to simply as 'the length of the honeycomb filter'), the length of the honeycomb filter 20 is from 0.1 to 0.5 time an outer diameter of the honeycomb filter 20, and a cell density of the honeycomb catalyst 10 is larger than that of the honeycomb filter 20.

The exhaust gas purifying device 1 of the present embodiment has the above constitution, and hence the device has a less increase of pressure drop and can purify the exhaust gas and collect a particulate matter with a high efficiency even immediately after start of a direct injection gasoline engine. Especially, the device is installed within 1 m from an outlet of an engine exhaust manifold, i.e., right under the engine, whereby even immediately after the start of the engine, the exhaust gas having a high temperature flows into the exhaust gas purifying device 1 of the present embodiment. Therefore, the particulate matter collected by the honeycomb filter 20 is easily burnt, and is not easily deposited in the honeycomb filter 20. Consequently, the honeycomb filter 20 has a less increase of the pressure drop due to the deposition of the particulate matter. Furthermore, the particulate matter is continuously burnt. Therefore, it is not necessary to hold the particulate matter for a long period of time, which can decrease the length of the honeycomb filter 20 along the extending direction of the cells 22 and decrease an initial pressure drop.

In the exhaust gas purifying device 1 of the present embodiment, the length of the honeycomb catalyst 10 along is from 2.0 to 10.0 times, preferably from 2.0 to 5.0 times, further preferably, from 2.0 to 3.0 times and especially preferably from 2.0 to 2.5 times the length of the honeycomb filter 20. When the lengths of the honeycomb catalyst and honeycomb filter are in the above numeric value range, the exhaust gas purifying device 1 of the present embodiment has a less increase of pressure drop and can purify the exhaust gas and collect the particulate matter with the high efficiency even immediately after the start of the engine even in a case where the device is installed in an exhaust system of the direct injection gasoline engine. If the length of the honeycomb catalyst 10 is less than 2.0 times the length of the honeycomb filter 20, i.e., the length of the honeycomb catalyst 10 is excessively small or the length of the honeycomb filter 20 is excessively large, the exhaust gas is not sufficiently purified due to the short honeycomb catalyst 10, or the initial pressure drop might increase due to the long honeycomb filter 20. On the other hand, if the length of the honeycomb catalyst 10 exceeds 10.0 times the length of the honeycomb filter 20, i.e., the length of the honeycomb catalyst 10 is excessively large or the length of the honeycomb filter 20 is excessively small, the initial pressure drop increases due to the long honeycomb catalyst 10. Moreover, since the length of the honeycomb filter 20 is excessively small, the particulate matter is deposited in the honeycomb filter 20 before burnt, which might increase the pressure drop.

Moreover, since the cell density of the honeycomb catalyst 10 is larger than that of the honeycomb filter 20, in the honeycomb catalyst 10 on an upstream side of the through channels of the exhaust gas, an area of the exhaust gas which comes in contact with the three way catalyst of the honeycomb catalyst 10 can be increased. Therefore, much more three way catalyst can be activated, and the exhaust gas can efficiently be purified. On the other hand, the honeycomb filter 20 on a downstream side of the through channels of the exhaust gas is a wall flow type filter having a comparatively large initial pressure drop, but the cell density can be decreased to suppress the initial pressure drop.

It is to be noted that in the present description, 'the outer diameter' of a honeycomb structure (including the honeycomb catalyst and the honeycomb filter) means the length of the longest line segment (the longest diameter) among line segments which can be drain in the bottom face of the honeycomb structure. That is, 'the outer diameter of the honeycomb structure' is the diameter of a circle (the bottom face) in a case where the whole shape of the honeycomb structure is, for example, a cylindrical shape, the length of a diagonal line of a square (the bottom face) in a case where the whole shape of the honeycomb structure is a regularly quadrangular post-like shape, or the length of the longest diagonal line of a quadrangular shape (the bottom face) in a case where the whole shape of the honeycomb structure is a hexagonal shape.

Moreover, in the present description, 'the initial pressure drop' is a pressure drop in a state where any particulate matter is not deposited in the honeycomb structure. 'The honeycomb structure' mentioned herein includes first and second honeycomb structures described later, and the honeycomb catalyst and honeycomb filter. This also applies to 'the honeycomb structure' simply referred hereinafter.

In the exhaust gas purifying device 1 of the present embodiment, the outer diameter of the honeycomb catalyst 10 is preferably not larger than that of the honeycomb filter 20. The outer diameter of the honeycomb catalyst 10 is more preferably equal to that of the honeycomb filter 20. In the exhaust gas purifying device 1 of the present embodiment having such a constitution, the through channels of the exhaust gas in the can member are not narrowed, the exhaust gas as a purification target can pass through the through channels, and the increase of the initial pressure drop can satisfactorily be suppressed.

Moreover, in the exhaust gas purifying device 1 of the present embodiment, the honeycomb catalyst and the honeycomb filter may be disposed in the can member so that the honeycomb catalyst 10 is positioned on the inflow port 31 side of the can member 30, the honeycomb filter 20 is positioned on the outflow port 32 side of the can member 30, the inflow side end face 15 of the honeycomb catalyst 10 faces the inflow port 31 side of the can member 30 and the outflow side end face 26 of the honeycomb filter 20 faces the outflow port 32 side of the can member 30. However, at least a part of the outflow side end face 16 of the honeycomb catalyst 10 preferably faces at least a part of the inflow side end face 25 of the honeycomb filter 20.
The whole outflow side end face 16 of the honeycomb catalyst 10 more preferably faces the inflow side end face 25 of the honeycomb filter 20. According to such a constitution of the exhaust gas purifying device 1 of the present embodiment, much more exhaust gas discharged from the outflow side end face 16 of the honeycomb catalyst 10 does not bend the through channels, but can directly reach the inflow side end face 25 of the honeycomb filter 20, which can suppress the pressure drop between the honeycomb catalyst 10 and the honeycomb filter 20.

It is to be noted that when the end faces 'face' each other, it is meant not only that the end faces face each other in a state where the end faces are parallel to each other (the cells of the honeycomb catalyst and honeycomb filter extend in parallel) but also that the end faces face each other in a state where the end faces are not parallel to each other. That is, in a plane including cell extending directions, when the cell extending directions have a tilt which is less than 60° but the end faces face each other, it can be considered that the end faces face each other. Moreover, when 'at least a part of the outflow side end face of the honeycomb catalyst faces at least a part of the inflow side end face of the honeycomb filter', it is meant that the honeycomb catalyst and the honeycomb filter are disposed so that at least a part of the inflow side end face of the honeycomb filter overlaps with a locus of the outflow side end face of the honeycomb catalyst being moved in parallel with the cell extending direction. Furthermore, when 'the whole outflow side end face of the honeycomb catalyst faces the inflow side end face of the honeycomb filter', it is meant that the honeycomb catalyst and the honeycomb filter are disposed so that the whole inflow side end face of the honeycomb filter overlaps with the locus of the outflow side end face of the honeycomb catalyst being moved in parallel with the cell extending direction.

Furthermore, in the exhaust gas purifying device 1 of the present embodiment, the extending direction of the cells 12 of the honeycomb catalyst 10 is further preferably parallel to that of the cells 22 of the honeycomb filter 20, and a central axis of the honeycomb catalyst 10 along the extending direction of the cells 12 (hereinafter also referred to simply as 'the central axis of the honeycomb catalyst') and a central axis of the honeycomb filter 20 along the extending direction of the cells 22 (hereinafter also referred to simply as 'the central axis of the honeycomb filter' are especially preferably positioned on the same straight line. According to such a constitution of the exhaust gas purifying device 1 of the present embodiment, the exhaust gas discharged from the honeycomb catalyst 10 through the outflow side end face 16 thereof can infiltrate into the inflow cells 22a opened in the inflow side end face 25 of the honeycomb filter 20 without bending the through channels, whereby it is possible to satisfactorily suppress the pressure drop during the inflow into the honeycomb filter 20. In particular, when the central axis of the honeycomb catalyst and the central axis of the honeycomb filter are positioned on the same straight line, it is possible to suppress not only the pressure drop between the honeycomb catalyst 10 and the honeycomb filter 20 but also the pressure drop during the inflow into the honeycomb filter 20. Therefore, it is possible to most effectively suppress the pressure drop caused by a positional relation between the honeycomb catalyst 10 and the honeycomb filter 20. Moreover, when the exhaust gas passes through the honeycomb catalyst 10, the temperature of the exhaust gas rises by an oxidizing reaction of hydrocarbon or carbon monoxide. Moreover, this high-temperature exhaust gas does not collide with the inner wall of the can member 30 but directly flows into the honeycomb filter 20. In consequence, heat can be prevented from being released to the can member 30. Moreover, the temperature in the honeycomb filter 20 can be raised to efficiently burn the deposited particulate matter.

Moreover, in the exhaust gas purifying device 1 of the present embodiment, a space disposed between the honeycomb catalyst 10 and the honeycomb filter 20 is preferably from 1 to 30 mm, further preferably from 2 to 20 mm and especially preferably from 2 to 10 mm. If the space between the honeycomb catalyst 10 and the honeycomb filter 20 is less than 1 mm and the exhaust gas purifying device 1 of the present embodiment is mounted on a car, owing to vibration during running, vibration transmitted from the engine or the like, the outflow side end face 16 of the honeycomb catalyst 10 comes in contact with the inflow side end face 25 of the honeycomb filter 20, and the honeycomb catalyst 10 and/or the honeycomb filter 20 causes breakdown, wear or the like sometimes. On the other hand, if the space exceeds 30 mm, the temperature of the exhaust gas discharged from the honeycomb catalyst 10 through the outflow side end face 16 lowers while the exhaust gas passes through the space. The particulate matter in the honeycomb filter 20 cannot sufficiently be burnt, and the pressure drop might increase.

Hereinafter, constituent elements of the exhaust gas purifying device of the present embodiment will further specifically be described.

[1-1] Honeycomb Catalyst:
As shown in Fig. 2, the honeycomb catalyst constituting the exhaust gas purifying device of the engine comprises the first honeycomb structure 13, and the three way catalyst loaded onto the partition walls 11 of the first honeycomb structure 13.

[1-1-1] First Honeycomb Structure:
As shown in Fig. 2, the first honeycomb structure (the honeycomb structure for the honeycomb catalyst) includes the partition walls 11 arranged to form the plurality of cells 12 which extend from the inflow side end face 15 to the outflow side end face 16 and become the through channels of the exhaust gas. It is to be noted that the first honeycomb structure shown in Fig. 2 has an outer peripheral wall 17 positioned at an outermost periphery thereof.

There is not any special restriction on the whole shape of the first honeycomb structure, and in addition to a cylindrical (columnar) shape shown in Fig. 2 or an elliptic cylinder (elliptic column) shape, examples of the shape include a polygonal post-like shape such as a triangular, quadrangular or hexagonal post-like shape, and a post-like shape including a bottom face having an indeterminate shape.

The length of the first honeycomb structure is preferably from 60 to 160 mm, further preferably from 70 to 150 mm and especially preferably from 80 to 140 mm. If the length of the first honeycomb structure is less than 60 mm, the honeycomb structure as the honeycomb catalyst might not sufficiently purify the exhaust gas. On the other hand, if the length of the first honeycomb structure exceeds 160 mm, the initial pressure drop tends to increase.

There is not any special restriction on the outer diameter of the first honeycomb structure, but the outer diameter is preferably from 80 to 180 mm, further preferably from 80 to 150 mm and especially preferably from 100 to 150 mm. If the outer diameter of the first honeycomb structure is less than 80 mm, a passage of the exhaust gas in a honeycomb catalyst portion of an exhaust gas treatment device is narrow, and the initial pressure drop unfavorably increases. On the other hand, if the outer diameter of the first honeycomb structure exceeds 180 mm, the exhaust gas treatment device (the can member) itself enlarges, which increases a mass. Moreover, a design problem also unfavorably occurs.

A value of a ratio (length/outer diameter) of the length of the first honeycomb structure with respect to the outer diameter of the first honeycomb structure is preferably from 0.5 to 1.5, further preferably from 0.7 to 1.4 and especially preferably from 1.0 to 1.2. When the value of the ratio of the length/the outer diameter of the first honeycomb structure is in the above numeric value range, the honeycomb catalyst of the exhaust gas purifying device of the present embodiment can obtain preferable size and shape.

There is not any special restriction on the shape of the cells formed in the first honeycomb structure (the shape of the section of the cell perpendicular to the cell extending direction), and a heretofore known cell shape may be used. Examples of the preferable shape include a quadrangular shape, a pentangular shape, a hexagonal shape, an octagonal shape, a triangular shape, a round shape and an elliptic shape, and another indeterminate shape may be used. Among these shapes, the round shape or the quadrangular or more polytonal shape is more preferable. With such a cell shape, a thick catalyst can be prevented from being deposited on corner portions, and the catalyst can uniformly be loaded onto the partition walls. Moreover, when the cell density, an open area ratio or the like is taken into consideration, a quadrangular or hexagonal cell shape is preferable. It is to be noted that not only one type of cell shape but also a combination of a plurality of shapes may be used.

The cell density of the first honeycomb structure is preferably from 62.0 to 186 cells/cm², further preferably from 62.0 to 100 cells/cm² and especially preferably from 62.0 to 80.0 cells/cm². When the cell density of the first honeycomb structure is in the above numeric value range, the exhaust gas, the partition walls of the first honeycomb structure and the three way catalyst loaded onto these partition walls can have an increased contact area. Moreover, the pressure drop of the first honeycomb structure can be prevented from being excessively increased. In consequence, the temperature of the exhaust gas can further be raised to reach a catalyst activating temperature earlier, and the exhaust gas can efficiently be purified.

The thickness of the partition walls of the first honeycomb structure is preferably from 0.051 to 0.102 mm, further preferably from 0.051 to 0.095 mm, especially preferably from 0.051 to 0.080 mm. When the thickness of the partition walls of the first honeycomb structure is in the above numeric value range and the three way catalyst described later is loaded (coat), sufficient exhaust gas through channels can be acquired, and the increase of the initial pressure drop can be suppressed. Moreover, when the thickness of the partition walls of the first honeycomb structure is in the above numeric value range, the whole heat capacity of the first honeycomb structure can be decreased. Therefore, the temperature of the first honeycomb structure easily rises by the heat of the exhaust gas or the reaction heat of the catalyst reaction, and the temperature can reach the catalyst activating temperature earlier.

The material of the first honeycomb structure preferably contains at least one selected from the group consisting of cordierite, mullite, alumina, silicon carbide and aluminum titanate.

The porosity of the partition walls of the first honeycomb structure is preferably from 20 to 50%, and the average pore diameter of the partition walls of the first honeycomb structure is preferably from 1 to 6 µm. When the porosity and average pore diameter of the partition walls of the first honeycomb structure are in the above numeric value range, close contact properties of the catalyst with the surfaces of the partition walls are improved, and the catalyst cannot easily peel. It is to be noted that in the present description, 'the porosity' and 'the average pore diameter' are the porosity and average pore diameter measured measured with mercury penetration method.

[Manufacturing Method of First Honeycomb Structure] Hereinafter, a manufacturing method of the first honeycomb structure will be described.

In the manufacturing method of the first honeycomb structure, first, a ceramic forming material containing a ceramic material is preferably prepared. The ceramic material contained in the ceramic forming material preferably contains at least one selected from the group consisting of a cordierite forming material, cordierite, mullite, alumina, silicon carbide and aluminum titanate; further preferably is at least one selected from the group consisting of the cordierite forming material, cordierite, mullite, alumina, silicon carbide and aluminum titanate; and especially preferably is one selected from the group consisting of the cordierite forming material, cordierite, mullite, alumina, silicon carbide and aluminum titanate. It is to be noted that the cordierite forming material is a ceramic material blended so as to obtain a chemical composition in which silica falls in a range of 42 to 56 mass%, alumina falls in a range of 30 to 45 mass%, and magnesia falls in a range of 12 to 16 mass%. When the material is fired, cordierite is formed.

As the cordierite forming material, specifically a silica source component, a magnesia source component and an alumina source component are preferably used.

Examples of the silica source component include quartz, kaolin, and molten silica. Moreover, particle diameters of the silica source component are preferably from 100 to 150 µm.

Examples of the magnesia (MgO) source component include talc and magnesite. Among these components, talc is preferable. The content of talc in the cordierite forming material is preferably from 37 to 43 mass%. The average particle diameter of talc is preferably from 5 to 50 µm, further preferably from 10 to 40 µm. Moreover, the magnesia source component may contain Fe₂O₃, CaO, Na₂O, K₂O and the like as impurities.

The alumina source component is preferably at least one selected from the group consisting of aluminum oxide and aluminum hydroxide, because the component contains less impurities. When aluminum hydroxide is used, the content of aluminum hydroxide in the cordierite forming material is preferably from 10 to 30 mass%. Moreover, when aluminum oxide is used, the content of aluminum oxide in the cordierite forming material is preferably from 1 to 45 mass%. Furthermore, when aluminum hydroxide and aluminum oxide are mixed and used, the content of aluminum hydroxide in the cordierite forming material is preferably from 5 to 25 mass%, and the content of aluminum oxide in the material is preferably from 10 to 40 mass%.

The ceramic forming material is preferably prepared by mixing the above ceramic material with a dispersion medium, a pore former, an organic binder, a dispersant, a surfactant and the like. The mixture ratios of the materials with respect to 100 parts by mass of the ceramic material are preferably from 10 to 40 parts by mass of the dispersion medium, from 0 to 40 parts by mass of the pore former, from 3 to 8 parts by mass of the organic binder, from 0.1 to 2 parts by mass of the dispersant, and from 0.1 to 2 parts by mass of the surfactant.

Examples of the dispersion medium include water. There is not any special restriction on the pore former as long as pores are formed after firing, and examples of the pore former include starch, resin balloon, water absorbing resin, silica gel and carbon (coke). Examples of the organic binder include hydroxylpropyl methyl cellulose, methyl cellulose, hydroxyethyl cellulose, carboxyl methyl cellulose and polyvinyl alcohol. Examples of the dispersant include dextrin and polyalcohol such as ethylene glycol. Examples of the surfactant include fatty acid soap.

Next, the prepared ceramic forming material is preferably kneaded by using a kneader, a vacuum clay kneader or the like to form a kneaded clay.

Next, the kneaded clay is used to form a cylindrical formed honeycomb article comprising partition walls arranged to form a plurality of cells which become through channels of a fluid and an outer peripheral wall positioned at an outermost periphery. Examples of the kneaded clay forming method include an extrusion forming method, an injection forming method and a press forming method. Among these method, the extrusion forming method is preferable, because the method has characteristics that continuous forming is easily performed and, for example, cordierite crystals can be oriented. The extrusion forming method can be performed using a device such as the vacuum clay kneader, a ram type extruder or a biaxial screw type continuous extruder. The formed honeycomb article is preferably formed by extruding the kneaded clay by use of, for example, a die having desirable cell shape, partition wall thickness and cell density. The material of the die is preferably a hard metal which is not easily worn.

After the above forming, the obtained formed honeycomb article may be dried. There is not any special restriction on a drying method, but examples of the method include hot air drying, microwave drying, dielectric drying, reduced pressure drying, vacuum drying and freeze drying. Above all, it is preferable to perform the dielectric drying, microwave drying or hot air drying alone or as a combination of them. Furthermore, as drying conditions, a drying temperature of 80 to 150°C and drying time of 5 minutes to 2 hours are preferably set.

Next, the obtained formed honeycomb article is preferably fired to obtain a fired honeycomb article (a first honeycomb structure).

Moreover, before firing (finally firing) the formed honeycomb article, the formed honeycomb article is preferably calcinated. The calcinating is performed for degreasing the article, and there is not any special restriction on a calcinating method as long as organic substances (the organic binder, the dispersant, the pore former, etc.) in the formed honeycomb article can be removed. In general, the burning temperature of the organic binder is from about 100 to 300°C, and the burning temperature of the pore former is from about 200 to 800°C. Therefore, as calcinating conditions, the article is preferably heated in an oxidizing atmosphere at about 200 to 1000°C for about 3 to 100 hours.

The formed honeycomb article is fired (finally fired) to sinter and densify the forming material constituting the calcinated formed honeycomb article, thereby acquiring a predetermined strength. Firing conditions (temperature, time and atmosphere) vary with the type of the forming material, and hence appropriate conditions may be selected in accordance with the type. For example, when the cordierite forming material is used, the firing temperature is preferably from 1410 to 1440°C. Moreover, the firing time is preferably from 3 to 15 hours.

The outer peripheral wall of the first honeycomb structure is preferably an outer peripheral wall formed integrally with the first honeycomb structure during the forming (an integrally formed wall), or is preferably an outer peripheral wall made of a cement material or the like and having a predetermined shape obtained by grinding the outer periphery of the first honeycomb structure after the forming (a cement coat wall). When the outer peripheral wall is the integrally formed wall, the material of the outer peripheral wall is preferably the same as that of the first honeycomb structure. Moreover, when the outer peripheral wall is the cement coat wall, examples of the material of the cement coat wall include a material obtained by adding a flux component such as glass to a co-base. Furthermore, the thickness of the outer peripheral wall is preferably from 0.5 to 1.5 mm.

[1-1-2] Ternary Catalyst:
The three way catalyst is a catalyst mainly for removing hydrocarbon (HC), carbon monoxide (CO) and nitrogen oxide (NOx) contained in the exhaust gas.

As the three way catalyst loaded onto the partition walls of the honeycomb filter, there may be used a catalyst obtained by loading a noble metal such as platinum (Pt), palladium (Pd) or rhodium (Rh) onto a carrier made of heat-resistant inorganic oxide such as alumina, titania, silica, cerium oxide, zirconia, tungsten oxide, zeolite, transition metal oxide, rare earth oxide or a mixture of them.

The amount of the three way catalyst to be loaded onto the partition walls of the honeycomb catalyst (the three way catalyst coat amount) is preferably from 100 to 400 g/L, further preferably from 120 to 300 g/L and especially preferably from 150 to 250 g/L. If the coat amount of the three way catalyst exceeds 400 g/L, it can be expected that the exhaust gas purifying performance of the honeycomb catalyst improves, but the cells as the through channels of the exhaust gas have a reduced sectional area, and the initial pressure drop unfavorably increases. On the other hand, if the coat amount of the three way catalyst is less than 100 g/L, the honeycomb catalyst might not sufficiently purify the exhaust gas. It is to be noted that in the present description, the catalyst coat amount (g/L) is the amount (g) of the catalyst to be loaded per unit volume (1 L) of the honeycomb structure.

There is not any special restriction on a method of loading (coating) the three way catalyst onto the honeycomb catalyst, and the three way catalyst may be loaded onto the partition walls of the first honeycomb structure, for example, by a method of wash-coating the partition walls of the first honeycomb structure with a catalyst solution containing the three way catalyst and performing a heat treatment at a high speed to bake the catalyst; a method of attaching a coating slurry containing the three way catalyst to the partition walls of the first honeycomb structure by use of a heretofore known ceramic film forming process such as a dipping process and performing drying and firing or the like.

[1-2] Honeycomb Filter: As shown in Fig. 3, the honeycomb filter constituting the exhaust gas purifying device of the present embodiment comprises the second honeycomb structure 23 and the plugged portions 24 alternately arranged to plug the open ends of the cells 22 of the second honeycomb structure 23.

[1-2-1] Second Honeycomb Structure:
The second honeycomb structure (the honeycomb structure for the honeycomb filter) includes the partition walls 21 arranged to form the plurality of cells 22 which extend from the inflow side end face 25 to the outflow side end face 26 and become the through channels of the exhaust gas. It is to be noted that the second honeycomb structure shown in Fig. 3 includes an outer peripheral wall 27 positioned at an outermost periphery. It is to be noted that the second honeycomb structure can be manufactured by a method similar to the manufacturing method of the first honeycomb structure.

It is to be noted that as described above, the length of the second honeycomb structure (the length of the honeycomb filter is from 2.0 to 10.0 times the length of the first honeycomb structure (the length of the honeycomb catalyst). When the lengths of the first and second honeycomb structures have the above relation and the exhaust gas purifying device of the present embodiment is installed in the exhaust system of the direct injection gasoline engine, the device has a less increase of pressure drop and can purify the exhaust gas and collect the particulate matter with the high efficiency even immediately after the start of the engine.

There is not any special restriction on the whole shape of the second honeycomb structure in the same manner as in the first honeycomb structure, and in addition to the cylindrical (columnar) shape shown in Fig. 2 or an elliptic cylinder (elliptic column) shape, examples of the shape include a polygonal post-like shape such as a triangular, quadrangular or hexagonal post-like shape, and a post-like shape including a bottom face having an indeterminate shape. It is to be noted that the shape of the end face of the first honeycomb structure is preferably the same as that of the end face of the second honeycomb structure.

The length of the second honeycomb structure is preferably from 15 to 50 mm, further preferably from 20 to 50 mm and especially preferably from 30 to 50 mm. When the length of the second honeycomb structure is in the above numeric value range, the particulate matter in the exhaust gas can efficiently be collected, and the increase of the pressure drop can be suppressed. Especially in a case where the exhaust gas purifying device of the present embodiment is used to purify the exhaust gas of the direct injection gasoline engine, the second honeycomb structure (the honeycomb filter) can be shortened to suppress the increase of the pressure drop as compared with a case where the device is used to purify the exhaust gas of a diesel engine. It is to be noted that if the length of the second honeycomb structure exceeds 50 mm, the initial pressure drop of the honeycomb filter unfavorably increases. On the other hand, the length of the second honeycomb structure is less than 15 mm, the particulate matter is deposited in the honeycomb filter before burnt, which might increase the pressure drop.

There is not any special restriction on the outer diameter of the second honeycomb structure, but the outer diameter is preferably from 80 to 180 mm, further preferably from 80 to 150 mm and especially preferably from 100 to 150 mm. If the outer diameter of the second honeycomb structure is less than 80 mm, the passage of the exhaust gas in the honeycomb catalyst portion of the exhaust gas treatment device is narrow, and the initial pressure drop unfavorably increases. On the other hand, if the outer diameter of the second honeycomb structure exceeds 180 mm, the exhaust gas treatment device (the can member) itself enlarges, which increases a mass. Moreover, a design problem also unfavorably occurs.

A value of a ratio (length/outer diameter) of the length of the second honeycomb structure with respect to the outer diameter of the second honeycomb structure is from 0.1 to 0.5, preferably from 0.2 to 0.5, further preferably from 0.2 to 0.4 and especially preferably from 0.2 to 0.3. When the value of the ratio of the length/the outer diameter of the second honeycomb structure is in the above numeric value range, the honeycomb filter of the exhaust gas purifying device of the present embodiment can obtain preferable size and shape.

There is not any special restriction on the shape of the cells formed in the second honeycomb structure (the shape of the section of each cell perpendicular to the cell extending direction), and a heretofore known cell shape may be used. Examples of the preferable shape include a quadrangular shape, a pentangular shape, a hexagonal shape, an octagonal shape, a triangular shape, a round shape and an elliptic shape, and another indeterminate shape may be used. Among these shapes, the round shape or the quadrangular or more polytonal shape is more preferable.
In case of such a cell shape, when the exhaust gas containing the particulate matter flows into the cells, the partition walls arranged to form the cells can satisfactorily collect the above particulate matter. Moreover, when the cell density, an open area ratio or the like is taken into consideration, a quadrangular or hexagonal cell shape is a preferable cell shape. It is to be noted that not only one type of cell shape but also a combination of a plurality of shapes may be used.

The cell density of the second honeycomb structure is preferably from 7.75 to 46.5 cells/cm², further preferably from 20.0 to 46.5 cells/cm² and especially preferably from 30.0 to 46.5 cells/cm². When the cell density of the second honeycomb structure is in the above numeric value range, the particulate matter collecting efficiency does not lower but the initial pressure drop can be decreased. It is to be noted that the cell density of the second honeycomb structure (the honeycomb structure for the honeycomb filter) is smaller than that of the second honeycomb structure (the honeycomb structure for the honeycomb catalyst).

The thickness of the partition walls of the second honeycomb structure is preferably from 0.100 to 0.508 mm, further preferably from 0.127 to 0.300 mm and especially preferably from 0.127 to 0.200 mm. When the thickness of the partition walls of the second honeycomb structure is in the above numeric value range and an oxidization catalyst described later is loaded (coat), sufficient exhaust gas through channels can be acquired, and the increase of the initial pressure drop can be suppressed.

The material of the second honeycomb structure may be similar to that of the first honeycomb structure.

The porosity of the partition walls of the second honeycomb structure is preferably from 35 to 80%, and the average pore diameter of the partition walls of the second honeycomb structure is preferably from 7 to 40 µm. When the porosity and average pore diameter of the partition walls of the second honeycomb structure are in the above numeric value range, resistance during the passing of the exhaust gas through the partition walls can be lowered, the increase of the initial pressure drop can be suppressed, and the particulate matter collecting efficiency can be raised.

The outer peripheral wall of the second honeycomb structure may have a constitution similar to that of the first honeycomb structure.

[1-2-2] Plugged Portion:
The plugged portions 24 formed in the honeycomb filter 20 are arranged to alternately plug the open ends of the cells 22 of the second honeycomb structure 23 so that the cells having the plugged open ends on the inflow side (the outflow cells 22b) and the cells having the plugged open ends on the outflow side (the inflow cells 22a) are alternately arranged.

As the plugged portions arranged to plug the open ends of the cells, plugged portions having a constitution similar to that used in a heretofore known honeycomb filter may be used. It is to be noted that the plugged portions are preferably formed by using a ceramic material similar to that of the second honeycomb structure.

A plugging material for forming the plugged portions can be prepared by mixing a ceramic material similar to that of the second honeycomb structure with, for example, a surfactant, water, a sintering aid and the like, adding a pore former thereto to increase the porosity if necessary and then kneading the material by use of a mixer or the like.

In a method of plugging the open ends of the cells of the second honeycomb structure to form the plugged portions, first, for example, a mask is applied to the open fontal areas of the inflow cells in a checkered pattern at inflow side end face of the second honeycomb structure prepared by a heretofore known manufacturing method, and this inflow side end face is immersed into a storage container of the above plugging material to insert the plugging material into the outflow cells which are not provided with any mask, thereby forming the plugged portions in a checkered pattern.

Afterward, a mask is applied to open frontal areas of the outflow cells in the outflow side end face of the second honeycomb structure so as to form the checkered pattern, and this outflow side end face is immersed into the storage container of the plugging material to insert the plugging material into the inflow cells which are not provided with any mask, thereby forming the plugged portions in the checkered pattern.

There is not any special restriction on a method of applying the mask to the open frontal areas of the cells, but examples of the method include a method of attaching an adhesive film to the whole end face of the second honeycomb structure and making pores partially in the adhesive film. The examples preferably also include a method of attaching the adhesive film to the whole end face of the second honeycomb structure and then making pores only in portions corresponding to the cells which are to be provided with the plugged portions by laser. As the adhesive film, there may be used a film made of a resin such as polyester, polyethylene or heat-hardening resin and having one surface thereof coated with an adhesive.

Finally, the second honeycomb structure provided with the plugged portions can be dried, for example, at 40 to 250°C over 2 minutes to 2 hours to dry the plugged portions.

It is to be noted that in the manufacturing method of the second honeycomb structure, the plugged portions may be formed before fired, and then fired together with the second honeycomb structure.

[1-2-3] Oxidization Catalyst:
The oxidization catalyst may further be loaded onto the partition walls of the honeycomb filter to burn the particulate matter. When the oxidization catalyst is loaded onto the partition walls of the honeycomb filter, the particulate matter in the honeycomb filter can further easily be burnt, and the increase of the pressure drop can be suppressed.

As the oxidization catalyst loaded onto the partition walls of the honeycomb filter to promote especially the oxidization of soot (the particulate matter), there may be used a catalyst obtained by loading a noble metal such as platinum (Pt) or palladium (Pd) onto a carrier made of heat-resistant inorganic oxide such as alumina, titania, silica, zirconia, cerium oxide, tungsten oxide, zeolite, transition metal oxide, rare earth oxide or a mixture of them. It is to be noted that the three way catalyst may be loaded onto the honeycomb filter. In this case, the honeycomb filter can have both of a function of oxidizing soot (the particulate matter) and a function of purifying the exhaust gas. As such a three way catalyst, a three way catalyst similar to that used in the honeycomb catalyst may be used.

The amount of the oxidization catalyst to be loaded onto the partition walls of the honeycomb filter (an oxidization catalyst coat amount) is preferably 0 to 60 g/L, further preferably from 10 to 60 g/L and especially preferably from 15 to 25 g/L. If the coat amount of the oxidization catalyst exceeds 60 g/L, the pores of the partition walls are closed, and the initial pressure drop unfavorably increases.

Examples of a method of loading the oxidization catalyst onto the partition walls of the honeycomb filter include a method similar to the method of loading the three way catalyst onto the honeycomb catalyst. The examples also include a method of immersing one end of the honeycomb filter into a catalyst coating slurry, and sucking the other end of the filter to coat both the pores and surfaces of the partition walls with the catalyst coating slurry, followed by drying.

[1-3] Can Member:
As shown in Fig. 1, the can member 30 constituting the exhaust gas purifying device 1 of the present embodiment has a cylindrical shape including the inflow port 31 connected to the engine exhaust manifold on the outlet side thereof, and the outflow port 32 through which the exhaust gas flowing into the can member through the inflow port 31 flows out of the can member, thereby holding the honeycomb catalyst 10 and the honeycomb filter 20 in a gas passage in the can member. It is to be noted that although not shown, the inflow port 31 of the can member 30 is usually connected to an exhaust tube connected to an outlet of the engine exhaust manifold, and the outflow port 32 is connected to another exhaust tube connected to a muffler or the like.

In the can member, the honeycomb catalyst and the honeycomb filter are disposed in series so that the honeycomb catalyst is positioned on the inflow port side of the can member (hereinafter also referred to as 'the upstream side) and the honeycomb filter is positioned on the outflow port side of the can member (hereinafter also referred to as 'the downstream side'). When the honeycomb catalyst and the honeycomb filter are thus disposed in series in the can member, the exhaust gas introduced into the can member can be purified in two stages.

That is, the exhaust gas discharged from the direct injection gasoline engine passes through the outlet and exhaust tube of the engine exhaust manifold, and is introduced into the inflow side end face of the honeycomb catalyst disposed in the can member on the upstream side of the exhaust gas purifying device of the present embodiment, whereby this honeycomb catalyst first purifies the gas (hereinafter, the purification by this honeycomb catalyst will also be referred to as 'the first purification').

Next, the exhaust gas discharged from the honeycomb catalyst through the outflow side end face thereof (the first purified exhaust gas) is introduced into the inflow side end face of the honeycomb filter, whereby the honeycomb filter further purifies the gas (hereinafter, the purification by this honeycomb filter will also be referred to as 'the second purification').

It is to be noted that in the above first purification, the exhaust gas containing hydrocarbon (HC), carbon monoxide (CO) and nitrogen oxide (NOx) is mainly purified by the three way catalyst of the honeycomb catalyst, and in the second purification, the first purified exhaust gas containing the particulate matter is purified (the particulate matter is removed) by the honeycomb filter. Therefore, the exhaust gas treatment device of the present embodiment can purify the exhaust gas and collect the particulate matter.

The can member includes a body portion for holding therein the honeycomb catalyst and the honeycomb filter. The can member shown in Fig. 1 is provided with the inflow port and the outflow port adapted to a bore diameter of the engine exhaust manifold and a bore diameter of the exhaust system through which the purified exhaust gas is discharged (e.g., the bore diameter of the above exhaust tube, the muffler or the like). Therefore, the body portion of the can member and the inflow port and outflow port of the can member further include an enlarging tube portion having a bore diameter increased from the inflow port and a narrowing tube portion having a bore diameter gradually decreased toward the outflow port. It is to be noted that, for example, when the bore diameter of the engine exhaust manifold, the exhaust tube, the muffler or the like is equal to that of the body portion of the can member, the can member does not especially have to include the above enlarging tube portion and narrowing tube portion.

The above body portion is preferably a cylindrical portion formed so that the inner diameter of the body portion is larger than that of each of the honeycomb catalyst and the honeycomb filter by a predetermined ratio, whereby the body portion covers the outer peripheral surfaces of the honeycomb catalyst and honeycomb filter, respectively, and the honeycomb catalyst and the honeycomb filter can be held in the body portion.

Moreover, the body portion of the can member for use in the exhaust gas purifying device of the present embodiment further preferably has a constitution in which the inner diameter of the body portion from the inflow side end face of the honeycomb catalyst disposed on the upstream side to the outflow side end face of the honeycomb filter disposed on the downstream side is larger than the outer diameter of each of the honeycomb catalyst and the honeycomb filter by a predetermined ratio. That is, the above body portion more preferably does not have such a shape that a part of the body portion is dented or recessed. If a part of the body portion is dented or recessed, the pressure drop increases sometimes during the passing of the exhaust gas through the body portion.

In particular, when the honeycomb catalyst and the honeycomb filter entirely have a cylindrical shape and an equal outer diameter (the diameter of the bottom face) and the central axes thereof are positioned on the same straight line, the body portion of the can member for use in the exhaust gas purifying device of the present embodiment is preferably a large cylinder in which the inner diameter of the body portion from the inflow side end face of the honeycomb catalyst disposed on the upstream side to the outflow side end face of the honeycomb filter disposed on the downstream side is larger than the outer diameter of each of the honeycomb catalyst and the honeycomb filter by the predetermined ratio. In the exhaust gas purifying device of the present embodiment having such a constitution, the increase of the pressure drop can remarkably satisfactorily be suppressed.

The material of the can member is, for example, preferably stainless steel, and especially preferably chromium based or chromium/nickel based stainless steel.

Examples of a method of holding the honeycomb catalyst 10 and the honeycomb filter 20 in the can member 30 include a method of covering the peripheries of the outer peripheral surfaces of the honeycomb catalyst 10 and the honeycomb filter 20 with a grasping material 33 made of a ceramic fiber mat and pressing the honeycomb catalyst and the honeycomb filter into the can member 30 so that the honeycomb catalyst 10 is positioned on the inflow port 31 side of the can member 30, the honeycomb filter 20 is positioned on the outflow port 32 side of the can member 30, the inflow side end face 15 of the honeycomb catalyst 10 faces the inflow port 31 side of the can member 30 and the outflow side end face 26 of the honeycomb filter 20 faces the outflow port 32 side of the can member 30. In this method, a space between the honeycomb catalyst 10 and the can member 30 and a space between the honeycomb filter and the can member 30 are filled with the ceramic fiber mat, which can protect the honeycomb catalyst 10 and the honeycomb filter 20 from external shock in a heat insulation manner.

Moreover, after disposing the honeycomb catalyst 10 and the honeycomb filter 20 in the can member 30 by the above method, the honeycomb catalyst 10 and the honeycomb filter 20 may further entirely or partially be welded and fixed to the inner surface of the can member 30.

The ceramic fiber mat used as the grasping material. 33 in the method of holding the honeycomb catalyst 10 and the honeycomb filter 20 in the can member 30 is preferably easily obtained or processed and preferably has sufficient heat resistance and cushion properties. The ceramic fiber mat is preferably a non-expansible mat which substantially does not contain any vermiculite; a low-expansible mat containing a small amount of vermiculite; or a mat containing, as a main component, a ceramic fiber made of alumina, high alumina, mullite, silicon carbide, silicon nitride, zirconia, titania or a compound of them. Above all, the non-expansible mat which does not substantially contain any vermiculite and contains alumina or mullite as a main component is further preferable.

Exhaust Gas Purifying Method:
Hereinafter, one embodiment of a exhaust gas purifying method of the present invention will be described in detail with reference to Fig. 4. It is to be noted that Fig. 4 is an exemplary diagram explaining the embodiment of the exhaust gas purifying method of the present invention and showing a section of an exhaust gas purifying device including a central axis thereof along an extending direction of cells of a honeycomb catalyst and a honeycomb filter constituting the device.

The embodiment of the exhaust gas purifying method of the present invention is a method of installing the exhaust gas purifying device of the present invention so that a distance from an outlet 3 of an engine exhaust manifold to the outflow side end face of the honeycomb filter disposed in the can member on the downstream side thereof (hereinafter also referred to as 'the distance L') is 1 m or less, to purify an exhaust gas discharged through the engine exhaust manifold.

The exhaust gas discharged from the direct injection gasoline engine passes through the outlet 3 and an exhaust tube 4 of an engine exhaust manifold 2, and flows into the exhaust gas purifying device 1 of the present invention through the inflow port 31 of the can member 30. The exhaust gas flowing into the device is introduced through the inflow side end face 15 of the honeycomb catalyst 10 disposed in the can member 30 on the upstream side, to flow into the cells of the honeycomb catalyst 10. The exhaust gas introduced into the cells of the honeycomb catalyst 10 comes in contact with the three way catalyst loaded onto the honeycomb catalyst 10, to purify the exhaust gas containing hydrocarbon (HC), carbon monoxide (CO) and nitrogen oxide (NOx) (the first purification).

Next, the exhaust gas purified by the honeycomb catalyst 10 (the first purification) is discharged through the outflow side end face 16 of the honeycomb catalyst 10, and introduced into the inflow side end face 25 of the honeycomb filter 20 to flow into the inflow side open ends of the inflow cells of the honeycomb filter 20. The exhaust gas which has flowed into the inflow cells of the honeycomb filter 20 infiltrates into the pores of the partition walls, and flows out of the filter through the pores of the outflow cells. When the exhaust gas passes through the partition walls in this manner, the particulate matter in the exhaust gas is attached to or deposited on the pores of the partition walls or the surfaces of the partition walls, and is removed from the exhaust gas, to purify the exhaust gas (the second purification). It is to be noted that the particulate matter attached and deposited onto the pores of the partition walls or the surfaces of the partition walls is comparatively rapidly burnt owing to the high temperature of the exhaust gas, and the particulate matter is discharged together with a gas of carbon dioxide or the like together with the exhaust gas. Moreover, when the oxidization catalyst is loaded onto the partition walls of the honeycomb filter 20 to promote the burning of the particulate matter, the particulate matter can further rapidly be burnt.

The exhaust gas purified by the honeycomb filter 20 (the second purification) is discharged from the honeycomb filter 20 through the outflow side open ends of the outflow cells 22b, and introduced into the can member 30 through the outflow port 32. The exhaust gas discharged from the can member 30 through the outflow port 32 passes through, for example, the exhaust tube 4, the muffler or the like, and is discharged to atmospheric air.

In the exhaust gas purifying method of the present embodiment, the exhaust gas purifying device of the present invention is installed with the distance L of 1 m or less, i.e., right under the engine, whereby the high-temperature exhaust gas flows into the device even immediately after the start of the engine. Therefore, the method has a less increase of pressure drop and can purify the exhaust gas and collect the particulate matter with a high efficiency even immediately after the start of the direct injection gasoline engine.

The distance (the distance L) from the outlet 3 of the engine exhaust manifold 2 to the outflow side end face 26 of the honeycomb filter 20 disposed in the can member 30 on the downstream side is, needless to say, longer than a distance from the inflow port 31 of the can member 30 to the outflow side end face 26 of the honeycomb filter 20. Therefore, the distance L is 1 m or less, preferably from 0.2 to 0.8 m, further preferably from 0.3 to 0.6 m and especially preferably from 0.3 to 0.5 m. If the distance L exceeds 1 m, the temperature of the exhaust gas discharged through the engine exhaust manifold 2 lowers before the exhaust gas flows into the exhaust gas purifying device 1 of the present invention. Therefore, in the honeycomb catalyst 10, time necessary for reaching the catalyst activating temperature lengthens, and an exhaust gas purification ratio lowers. In the honeycomb filter 20, the particulate matter is not easily burnt, which might increase the pressure drop.

### [Examples]

Hereinafter, the present invention will specifically be described with respect to examples, but the present invention is not limited to these examples.

### (Example 1)

### [Preparation of Honeycomb Catalyst (A)]

First, to a ceramic material, i.e., to 100 parts by mass of cordierite forming material obtained by mixing alumina, aluminum hydroxide, kaoline, talc and silica, 35 parts by mass of water as a dispersion medium, 6 parts by mass of hydroxypropyl methyl cellulose as an organic binder and 0.5 part by mass of ethylene glycol as a dispersant were added, respectively, mixed and kneaded to prepare a kneaded clay.

Next, the kneaded clay was extruded by using a predetermined die, to form a formed honeycomb article. The obtained formed honeycomb article was dried by a microwave drier, and further completely dried by a hot air drier, and then both end faces of the formed honeycomb article were cut to obtain a predetermined dimension. Afterward, this formed honeycomb article was fired at 1410 to 1440°C for 5 hours, thereby obtaining a first honeycomb structure.

The obtained first honeycomb structure had a cylindrical shape having an outer diameter (the diameter of a bottom face) of 110 mm and a length of 110 mm, a cell density of 62.0 cells/cm², a partition wall thickness of 0.102 mm, a partition wall porosity of 28.0%, and an average pore diameter of 4 µm. These values are shown in Table 1.

On the other hand, mixed particles (a specific surface area of 50 m²/g) of γAl₂O₃ and CeO₂ having an average particle diameter of 100 µm were wet-ground by a ball mill to obtain ground particles having an average particle diameter of 5 µm. These ground particles were immersed into a solution containing platinum (Pt) and rhodium (Rh) to load Pt and Rh into pores of the ground particles. Subsequently, acetic acid and water were added to the ground particles including loaded Pt and Rh to prepare a three way catalyst coating slurry.

Next, the inflow side end of the above first honeycomb structure was immersed into the stored three way catalyst coating slurry, and the outflow side end of the structure was vacuum-sucked, thereby coating the surfaces of the partition walls with the three way catalyst. The first honeycomb structure coated with this three way catalyst was dried and fired at 600°C for 3 hours, to prepare a honeycomb catalyst (A).

The amount of oxide (γAl₂O₃ and CeO₂) which coats the honeycomb catalyst (A) ('the three way catalyst coat amount') was '220 (g/L)', and a Pt and Rh coat amount ('the noble metal coat amount') was '2 (g/L)'. It is to be noted that the Pt coat amount was 1.66 g/L, and the Rh coat amount was 0.34 g/L.

### [Preparation Method of Honeycomb Filter (B)]

A kneaded clay was prepared in the same manner as in the honeycomb catalyst except that 13 parts by mass of coke having an average particle diameter of 15 µm were further added as a pore former to a kneaded clay material.

Next, the kneaded clay was extruded by using a predetermined die, to form a formed honeycomb article. The obtained formed honeycomb article was dried by a microwave drier, and further completely dried by a hot air drier, and both end faces of the formed honeycomb article were cut to obtain a predetermined dimension.

Next, a mask was alternately applied to inflow side open frontal areas of inflow cells of the formed honeycomb article in a checkered pattern, and the inflow side end of the formed honeycomb article was immersed into a plugging slurry containing the cordierite forming material, to form plugged portions alternately arranged in the checkered pattern. The outflow end of the article was similarly provided with plugged portions in outflow side ends of inflow cells.

Afterward, the formed honeycomb article having the formed plugged portions was dried by the hot air drier, and further fired at 1410 to 1440°C for 5 hours, thereby preparing a honeycomb filter (B).

The obtained honeycomb filter (B) had a cylindrical shape having 'an outer diameter D_{B}' (the diameter of a bottom face) of '110 (mm)' and 'a length L_{B}' of '30 (mm)', and had 'a cell density ρ_{B}' of '7.8 (cells/cm²)', 'a partition wall thickness' of '0.356 (mm)', a partition wall 'porosity' of '40.0 (%)' and 'an average pore diameter' of '8 (µm)'. These values are shown in Fig. 2.

### [Preparation of Exhaust Gas Purifying Device]

The honeycomb catalyst (A) and honeycomb filter (B) prepared by the above preparation method were disposed so that the honeycomb catalyst (A) was positioned on an upstream side. Moreover, a ceramic fiber mat was used as a grasping material, and the honeycomb catalyst and the honeycomb filter was pressed and fixed into a can member, to prepare an exhaust gas purifying device of Example 1.

A value of a ratio 'L_{A}/L_{B}' of a length L_{A} of the honeycomb catalyst (A) with respect to a length L_{B} of the honeycomb filter (B) of the prepared exhaust gas purifying device of Example 1 was '3.0', a value of a ratio 'L_{B}/D_{B}' of the length L_{B} with respect to the diameter D_{B} of the honeycomb filter (B) was '0.27', a relation of 'the cell density ρ_{A}:ρ_{B}' between the honeycomb catalyst (A) and the honeycomb filter (B) was 'ρ_{A}>ρ_{B}', 'the arrangement of A and B' was 'inside the same can member', and 'the distance L' was '500 (mm)'. Moreover, as to the prepared exhaust gas purifying device of Example 1, properties were evaluated. The evaluation of a purification ratio was acceptable 'OK', the evaluation of a pressure drop was acceptable 'OK', and general judgment was acceptable 'OK'. It is to be noted that measuring methods of the above physical values and evaluation method of the properties are as follows. Furthermore, the results are shown in Table 3.

### [Porosity (%) and Average Pore Diameter (µm)]

The porosities and average pore diameters of the honeycomb catalyst and honeycomb filter were measured by using a mercury porosimeter (trade name 'Auto Pore III model 9405' manufactured by Micromeritics Co., Ltd.).

### [Evaluation of Purification Ratio]

Each of exhaust gas purifying devices of examples was attached to an exhaust system of a car on which a 2.0 L direct injection gasoline engine was mounted. The car was used, and emissions of hydrocarbon (HC), carbon monoxide (CO) and nitrogen oxide (NOx) in an exhaust gas during an operation as a vehicle test by a chassis dynamo in European regulation operation mode were measured. When all the measured emissions were below Euro5 regulation value, the emissions were regarded as acceptable, and 'OK' was indicated in the table. In another case, the emissions were regarded as unacceptable, and 'NG' was indicated.

### [Evaluation of Particulate Matter Discharge Number (particles/km)]

When a vehicle test similar to the above vehicle test in 'the evaluation of the purification ratio' was performed, the number of particles of the particulate matter in the exhaust gas (particles/km) was measured by a method attached to Euro6 regulation scheme. When the measured number of the discharged particles of the particulate matter was 6x10¹¹ particles/km or less, the result was evaluated as acceptable, and 'OK' was indicated in the table. In another case, the result was evaluated as unacceptable, and 'NG' was indicated in the table.

### [Evaluation of Pressure Drop]

In an exhaust system of the car used in 'the evaluation of the purification ratio' described above, a cylindrical flow through honeycomb structure having a cell density of 93 cells/cm², a partition wall thickness of 0.076 mm, a bottom face diameter of 105.7 mm and a length of 114 mm was installed. This car was used, the pressure drop during a full load operation performed as the vehicle test by the chassis dynamo was measured, and the measured value was used as a reference value. Next, the car including the attached exhaust gas purifying device of each example was used, the vehicle test was performed by a method similar to the method of measuring the reference value, and the pressure drop during the full load operation was measured. When an increase amount of the measured value of each example with respect to the reference value was less than 10 kPa, the result was evaluated as acceptable, and 'OK' was indicated in the table. When the increase amount was 10 kPa or more, the result was evaluated as unacceptable, and 'NG' was indicated in the table.

### [General Judgment]

When [the evaluation of the purification ratio], [the evaluation of the particulate matter discharge number (particles/km)] and [the evaluation of the pressure drop] were all acceptable 'OK', the results were judged as acceptable, and 'OK' was indicated in the table. In another case, the results were judged as unacceptable, and 'NG' was indicated in the table.

**[Table 1]**

| | Honeycomb catalyst (A) | | | | | | | | |
|---|---|---|---|---|---|---|---|---|---|
| | Outer diameter D_{A} | Length L_{A} | L_{A}/D_{A} | Cell density P_{A} | Partition wall thickness | Porosity | Average pore diameter | Three way catalyst coat amount | Noble metal amount |
| | (mm) | (mm) | | (cells/cm²) | (mm) | (%) | (µm) | (g/L) | (g/L) |
| Example 1 | 110 | 110 | 1.00 | 62.0 | 0.102 | 28.0 | 4 | 220 | 2 |
| Example 2 | 110 | 110 | 1.00 | 62.0 | 0.102 | 28.0 | 4 | 300 | 3 |
| Example 3 | 110 | 110 | 1.00 | 62.0 | 0.102 | 28.0 | 4 | 220 | 2 |
| Example 4 | 110 | 110 | 1.00 | 62.0 | 0.102 | 28.0 | 4 | 250 | 2 |
| Comparative Example 1 | 110 | 110 | 1.00 | 31.0 | 0.102 | 28.0 | 4 | 250 | 2 |
| Comparative Example 2 | 110 | 110 | 1.00 | 62.0 | 0.102 | 28.0 | 4 | 250 | 2 |
| Comparative Example 3 | 110 | 110 | 1.00 | 62.0 | 0.102 | 28.0 | 4 | 250 | 2 |
| Comparative Example 4 | 110 | 55 | 0.50 | 62.0 | 0.102 | 28.0 | 4 | 250 | 2 |
| Comparative Example 5 | 110 | 330 | 3.00 | 62.0 | 0.102 | 28.0 | 4 | 250 | 2 |
| Comparative Example 6 | 110 | 110 | 1.00 | 46.5 | 0.356 | 28.0 | 4 | 220 | 2 |
| Comparative Example 7 | 110 | 110 | 1.00 | 93.0 | 0.051 | 28.0 | 4 | 220 | 2 |
| Comparative Example 8 | 110 | 50 | 0.45 | 93.0 | 0.051 | 28.0 | 4 | 220 | 2 |
| Comparative Example 9 | 110 | 200 | 1.82 | 93.0 | 0.051 | 28.0 | 4 | 220 | 2 |
| Comparative Example 10 | 110 | 60 | 0.55 | 93.0 | 0.076 | 28.0 | 4 | 220 | 3 |
| Example 5 | 110 | 110 | 1.00 | 139.5 | 0.051 | 28.0 | 4 | 250 | 2 |
| Example 6 | 110 | 110 | 1.00 | 139.5 | 0.051 | 28.0 | 4 | 350 | 3 |
| Example 7 | 110 | 110 | 1.00 | 139.5 | 0.051 | 28.0 | 4 | 250 | 3 |
| Example 8 | 110 | 110 | 1.00 | 139.5 | 0.051 | 28.0 | 4 | 300 | 3 |
| Example 9 | 110 | 60 | 0.55 | 62.0 | 0.076 | 28.0 | 4 | 220 | 1 |
| Example 10 | 110 | 60 | 0.55 | 62.0 | 0.076 | 28.0 | 4 | 300 | 2 |
| Example 11 | 110 | 60 | 0.55 | 62.0 | 0.076 | 28.0 | 4 | 220 | 2 |
| Example 12 | 110 | 60 | 0.55 | 62.0 | 0.076 | 28.0 | 4 | 210 | 2 |
| Example 13 | 110 | 155 | 1.41 | 93.0 | 0.051 | 28.0 | 4 | 250 | 1 |
| Example 14 | 110 | 155 | 1.41 | 93.0 | 0.051 | 28.0 | 4 | 300 | 3 |
| Example 15 | 110 | 155 | 1.41 | 93.0 | 0.051 | 28.0 | 4 | 220 | 2 |
| Example 16 | 110 | 155 | 1.41 | 93.0 | 0.051 | 28.0 | 4 | 250 | 2 |
| Example 17 | 110 | 60 | 0.55 | 93.0 | 0.076 | 28.0 | 4 | 250 | 2 |
| Example 18 | 110 | 60 | 0.55 | 93.0 | 0.076 | 28.0 | 4 | 300 | 3 |
| Example 19 | 110 | 60 | 0.55 | 93.0 | 0.076 | 28.0 | 4 | 250 | 3 |
| Example 20 | 110 | 60 | 0.55 | 93.0 | 0.076 | 28.0 | 4 | 300 | 3 |
| Example 21 | 110 | 155 | 1.41 | 186.0 | 0.051 | 28.0 | 4 | 300 | 2 |
| Example 22 | 110 | 155 | 1.41 | 186.0 | 0.051 | 28.0 | 4 | 350 | 3 |
| Example 23 | 110 | 155 | 1.41 | 186.0 | 0.051 | 28.0 | 4 | 250 | 3 |
| Example 24 | 110 | 155 | 1.41 | 186.0 | 0.051 | 28.0 | 4 | 300 | 3 |
| Example 25 | 110 | 155 | 1.41 | 186.0 | 0.051 | 28.0 | 4 | 300 | 3 |
| Example 26 | 90 | 60 | 0.67 | 93.0 | 0.076 | 28.0 | 4 | 250 | 2 |
| Example 27 | 70 | 60 | 0.86 | 93.0 | 0.076 | 28.0 | 4 | 250 | 2 |

**[Table 2]**

| | Honeycomb filter (B) | | | | | | | | |
|---|---|---|---|---|---|---|---|---|---|
| | Outer diameter D_{B} | Length L_{B} | L_{B}/D_{B} | Cell density ρ_{B} | Partition wall thickness | Porosity | Average pore diameter | Oxidation catalyst coat amount | Noble metal amount |
| | (mm) | (mm) | | (cells/cm²) | (mm) | (%) | (µm) | (g/L) | (g/L) |
| Example 1 | 110 | 30 | 0.27 | 7.8 | 0.356 | 40.0 | 10 | 0 | 0 |
| Example 2 | 110 | 30 | 0.27 | 15.5 | 0.254 | 40.0 | 10 | 0 | 0 |
| Example 3 | 110 | 30 | 0.27 | 31.0 | 0.203 | 40.0 | 10 | 0 | 0 |
| Example 4 | 110 | 30 | 0.27 | 46.5 | 0.152 | 40.0 | 10 | 0 | 0 |
| Comparative Example 1 | 110 | 30 | 0.27 | 46.5 | 0.152 | 40.0 | 10 | 0 | 0 |
| Comparative Example 2 | 110 | 10 | 0.09 | 46.5 | 0.152 | 40.0 | 10 | 0 | 0 |
| Comparative Example 3 | 110 | 60 | 0.55 | 46.5 | 0.152 | 40.0 | 10 | 0 | 0 |
| Comparative Example 4 | 110 | 30 | 0.27 | 46.5 | 0.152 | 40.0 | 10 | 0 | 0 |
| Comparative Example 5 | 110 | 30 | 0.27 | 46.5 | 0.152 | 40.0 | 10 | 0 | 0 |
| Comparative Example 6 | 110 | 10 | 0.09 | 93.0 | 0.076 | 50.0 | 20 | 20 | 0.5 |
| Comparative Example 7 | 110 | 60 | 0.55 | 46.5 | 0.254 | 42.0 | 12 | 20 | 0.5 |
| Comparative Example 8 | 110 | 30 | 0.27 | 46.5 | 0.254 | 42.0 | 12 | 20 | 0.5 |
| Comparative Example 9 | 110 | 15 | 0.14 | 46.5 | 0.254 | 42.0 | 12 | 20 | 0.5 |
| Comparative Example 10 | 110 | 15 | 0.14 | 46.5 | 0.356 | 50.0 | 20 | 20 | 0.5 |
| Example 5 | 110 | 50 | 0.45 | 7.8 | 0.508 | 65.0 | 35 | 20 | 0.5 |
| Example 6 | 110 | 50 | 0.45 | 15.5 | 0.406 | 65.0 | 35 | 50 | 0.6 |
| Example 7 | 110 | 50 | 0.45 | 31.0 | 0.406 | 65.0 | 35 | 50 | 0.6 |
| Example 8 | 110 | 50 | 0.45 | 46.5 | 0.406 | 65.0 | 35 | 20 | 0.5 |
| Example 9 | 110 | 20 | 0.18 | 7.8 | 0.254 | 38.0 | 8 | 0 | 0 |
| Example 10 | 110 | 20 | 0.18 | 15.5 | 0.178 | 38.0 | 8 | 0 | 0 |
| Example 11 | 110 | 20 | 0.18 | 31.0 | 0.102 | 38.0 | 8 | 0 | 0 |
| Example 12 | 110 | 20 | 0.18 | 46.5 | 0.102 | 38.0 | 8 | 0 | 0 |
| Example 13 | 110 | 40 | 0.36 | 7.8 | 0.406 | 42.0 | 12 | 20 | 0.5 |
| Example 14 | 110 | 40 | 0.36 | 15.5 | 0.305 | 42.0 | 12 | 20 | 0.6 |
| Example 15 | 110 | 40 | 0.36 | 31.0 | 0.254 | 42.0 | 12 | 20 | 0.6 |
| Example 16 | 110 | 40 | 0.36 | 46.5 | 0.254 | 42.0 | 12 | 20 | 0.5 |
| Example 17 | 110 | 15 | 0.14 | 7.8 | 0.457 | 50.0 | 20 | 20 | 0.5 |
| Example 18 | 110 | 15 | 0.14 | 15.5 | 0.356 | 50.0 | 20 | 20 | 0.6 |
| Example 19 | 110 | 15 | 0.14 | 31.0 | 0.356 | 50.0 | 20 | 20 | 0.6 |
| Example 20 | 110 | 15 | 0.14 | 46.5 | 0.356 | 50.0 | 20 | 20 | 0.5 |
| Example 21 | 110 | 20 | 0.18 | 7.8 | 0.610 | 65.0 | 38 | 50 | 0.5 |
| Example 22 | 110 | 20 | 0.18 | 15.5 | 0.457 | 65.0 | 38 | 50 | 0.6 |
| Example 23 | 110 | 20 | 0.18 | 31.0 | 0.508 | 65.0 | 38 | 50 | 0.6 |
| Example 24 | 110 | 20 | 0.18 | 46.5 | 0.457 | 65.0 | 38 | 50 | 0.5 |
| Example 25 | 110 | 20 | 0.18 | 46.5 | 0.457 | 65.0 | 50 | 50 | 0.5 |
| Example 26 | 110 | 15 | 0.14 | 46.5 | 0.356 | 50.0 | 20 | 50 | 0.5 |
| Example 27 | 110 | 15 | 0.14 | 46.5 | 0.356 | 50.0 | 20 | 50 | 0.5 |

**[Table 3]**

| | L_{A} / L_{B} | L_{B} / D_{B} | Cell density ρ_{A}: ρ_{B} | Arrangement of A and B | Distance L from engine | Evaluation result | | | | General Judgment |
|---|---|---|---|---|---|---|---|---|---|---|
| | | | | | | Purification ratio | PM | | Pressure drop | |
| | | | | | (mm) | | Discharge number (particles/km) | Evaluation | | |
| Example 1 | 3.7 | 0.27 | ρA>ρB | In the same can member | 500 | OK | 1x10¹¹ | OK | OK | OK |
| Example 2 | 3.7 | 0.27 | ρA>ρB | In the same can member | 700 | OK | 1x10¹¹ | OK | OK | OK |
| Example 3 | 3.7 | 0.27 | ρA>pB | In the same can member | 700 | OK | 1x10¹¹ | OK | OK | OK |
| Example 4 | 3.7 | 0.27 | ρA>ρB | In the same can member | 500 | OK | 1x10¹¹ | OK | OK | OK |
| Comparative Example 1 | 3.7 | 0.27 | ρA<ρB | In the same can member | 500 | NG | 1x10¹¹ | OK | OK | NG |
| Comparative Example 2 | 11.0 | 0.09 | ρA>ρB | In the same can member | 500 | OK | 8x10¹¹ | NG | OK | NG |
| Comparative Example 3 | 1.8 | 0.55 | ρA>ρB | In the same can member | 500 | OK | 1x10¹¹ | OK | NG | NG |
| Comparative Example 4 | 1.8 | 0.27 | ρA>ρB | In the same can member | 500 | NG | 1×10¹¹ | OK | OK | NG |
| Comparative Example 5 | 11.0 | 0.27 | ρA>ρB | In the same can member | 500 | OK | 1x10¹¹ | OK | NG | NG |
| Comparative Example 6 | 11.0 | 0.09 | ρA<ρB | In the same can member | 600 | OK | 8×10¹¹ | NG | NG | NG |
| Comparative Example 7 | 1.8 | 0.55 | ρA>ρB | In the same can member | 600 | OK | 3x10¹¹ | OK | NG | NG |
| Comparative Example 8 | 1.7 | 0.27 | ρA>ρB | In the same can member | 600 | NG | 3x10¹¹ | OK | OK | NG |
| Comparative Example 9 | 13.3 | 0.14 | pA>pB | In the same can member | 600 | NG | 5x10¹¹ | OK | NG | NG |
| Comparative Example 10 | 4.0 | 0.14 | ρA>ρB | Separate can member | 700 | OK | 5x10¹¹ | OK | NG | NG |
| Example 5 | 2.2 | 0.45 | ρA>ρB | In the same can member | 600 | OK | 5x10¹¹ | OK | OK | OK |
| Example 6 | 2.2 | 0.45 | ρA>ρB | in the same can member | 700 | OK | 5×10¹¹ | OK | OK | OK |
| Example 7 | 2.2 | 0.45 | ρA>ρB | In the same can member | 700 | OK | 5x10¹¹ | OK | OK | OK |
| Example 8 | 2.2 | 0.45 | ρA>ρB | In the same can member | 700 | OK | 3×10¹¹ | OK | OK | OK |
| Example 9 | 3.0 | 0.18 | ρA>ρB | In the same can member | 500 | OK | 1x10¹¹ | OK | OK | OK |
| Example 10 | 3.0 | 0.18 | ρA>ρB | In the same can member | 700 | OK | 1×10¹¹ | OK | OK | OK |
| Example 11 | 3.0 | 0.18 | ρA>ρB | In the same can member | 700 | OK | 1x10¹¹ | OK | OK | OK |
| Example 12 | 3.0 | 0.18 | ρA>ρB | In the same can member | 500 | OK | 1x10¹¹ | OK | OK | OK |
| Example 13 | 3.9 | 0.36 | ρA>ρB | In the same can member | 600 | OK | 3x10¹¹ | OK | OK | OK |
| Example 14 | 3.9 | 0.36 | pA>pB | In the same can member | 700 | OK | 3×10¹¹ | OK | OK | OK |
| Example 15 | 3.9 | 0.36 | ρA>ρB | In the same can member | 700 | OK | 3x10¹¹ | OK | OK | OK |
| Example 16 | 3.9 | 0.36 | ρA>ρB | In the same can member | 600 | OK | 3x10¹¹ | OK | OK | OK |
| Example 17 | 4.0 | 0.14 | ρA>ρB | In the same can member | 600 | OK | 4x10¹¹ | OK | OK | OK |
| Example 18 | 4.0. | 0.14 | ρA>ρB | In the same can member | 700 | OK | 4x10¹¹ | OK | OK | OK |
| Example 19 | 4.0 | 0.14 | ρA>ρB | In the same can member | 700 | OK | 3×10¹¹ | OK | OK | OK |
| Example 20 | 4.0 | 0.14 | ρA>ρB | In the same can member | 600 | OK | 3x10¹¹ | OK | OK | OK |
| Example 21 | 7.8 | 0.18 | ρA>ρB | In the same can member | 700 | OK | 5x10¹¹ | OK | OK | OK |
| Example 22 | 7.8 | 0.18 | ρA>ρB | In the same can member | 700 | OK | 5x10¹¹ | OK | OK | OK |
| Example 23 | 7.8 | 0.18 | ρA>ρB | In the same can member | 700 | OK | 5x10¹¹ | OK | OK | OK |
| Example 24 | 7.8 | 0.18 | ρA>ρB | In the same can member | 700 | OK | 3x10¹¹ | OK | OK | OK |
| Example 25 | 7.8 | 0.18 | ρA>ρB | In the same can member | 900 | OK | 6x10¹¹ | OK | OK | OK |
| Example 26 | 4.0 | 0.14 | ρA>ρB | In the same can member | 700 | OK | 3x10¹¹ | OK | OK | OK |
| Example 27 | 4.0 | 0.14 | ρA>ρB | In the same can member | 700 | OK | 3x10¹¹ | OK | OK | OK |

### (Examples 2 to 27 and Comparative Examples 1 to 10)

Exhaust gas purifying devices of examples and comparative examples were prepared in the same manner as in Example 1 except that 'outer diameter', 'length', 'length/outer diameter', 'cell density', 'partition wall thickness', 'porosity', 'average pore diameter', 'catalyst coat amount' and 'noble metal amount' of each honeycomb catalyst (A) were set as shown in Table 1, 'outer diameter', 'length', 'length/outer diameter', 'cell density', 'partition wall thickness', 'porosity', 'average pore diameter', 'catalyst coat amount' and 'noble metal amount' of each honeycomb filter (B) were set as shown in Table 2, and 'L_{A}/L_{B}', 'L_{B}/D_{B}' 'cell density ρ_{A}:ρ_{B}', 'arrangement of A and B' and 'distance L' were set as shown in Table 3. As to these exhaust gas purifying devices, properties were evaluated in the same manner as in Example 1, and the results are shown in Table 3.

On the other hand, when 'the catalyst coat amount' of the honeycomb filter (B) was other than '0 (g/L)', the honeycomb filter (B) having a loaded oxidization catalyst was prepared by a method as follows.

Mixed particles (a specific surface area of 50 m²/g) of γAl₂O₃ and CeO₂ having an average particle diameter of 100 µm were wet-ground by a ball mill to obtain ground particles having an average particle diameter of 5 µm. These ground particles were immersed into a solution containing platinum (Pt) to load Pt into pores of the ground particles. Acetic acid and water were added to the ground particles including loaded Pt to prepare an oxidization catalyst coating slurry. Next, an inflow side end of the honeycomb filter (B) prepared by the preparation method of the honeycomb filter (B) of Example 1 was immersed into the stored oxidization catalyst coating slurry, and the outflow side end of the filter was vacuum-sucked, thereby coating the surfaces of the partition walls with the oxidization catalyst. The honeycomb filter (B) coated with this oxidization catalyst was dried and fired at 600°C for 3 hours, to prepare the honeycomb filter (B) having the loaded oxidization catalyst.

As shown in Table 3, in the exhaust gas purifying devices of Examples 1 to 27, the evaluations of 'the purification ratio', 'the particulate matter discharge number' and 'the pressure drop' were acceptable 'OK'.

In Comparative Example 1, 'cell density ρ_{A}' of the honeycomb catalyst (A) was small '31.0 (cells/cm²)', and a relation of 'cell density ρ_{A}:ρ_{B}' was 'ρ_{A}<ρ_{B}', whereby a purifying ability by the honeycomb catalyst (A) deteriorated, and the evaluation of 'the purification ratio' was unacceptable 'NG'.

In Comparative Examples 2 and 6, 'the length L_{B}' of the honeycomb filter (B) was small '10 (mm)' and the ratio of 'L_{A}/L_{B}' was excessively small '0.09', whereby the amount of the particulate matter passing per unit area of the partition walls became large, i.e., a partition wall area decreased. In consequence, a soot collecting ratio lowered, 'the particulate matter discharge number' increased, and the evaluation was unacceptable 'NG'. Moreover, in Comparative Example 6, 'cell density ρ_{B}' of the honeycomb filter (B) was large '93.0 (cells/cm²)', and a relation of 'cell density ρ_{A}:ρ_{B}' was 'ρ_{A}<ρ_{B}', whereby an initial pressure drop increased, and the evaluation of 'the pressure drop' was unacceptable 'NG'.

In Comparative Examples 3 and 7, 'the length L_{B}' of the honeycomb filter (B) was large '60 (mm)' and the ratio of 'L_{A}/L_{B}' was small '1.8', whereby the initial pressure drop increased, and the evaluation of 'the pressure drop' was unacceptable 'NG'.

In Comparative Examples 4 and 8, 'the length L_{A}' of the honeycomb catalyst (A) was short '55 (mm)' or '50 (mm)' and the ratio of 'L_{A}/L_{B}' was small '1.8' or '1.7', whereby the purifying ability by the honeycomb catalyst (A) deteriorated, and the evaluation of 'the purification ratio' was unacceptable 'NG'.

In Comparative Examples 5 and 9, 'the length L_{A}' of the honeycomb catalyst (A) was long '330 (mm)' or '200 (mm)' and the ratio of 'L_{A}/L_{B}' was large '11.0' or '13.3', whereby the initial pressure drop increased, and the evaluation of 'the pressure drop' was unacceptable 'NG'. Moreover, in Comparative Example 9, 'the length L_{A}' of the honeycomb catalyst (A) was long '200 (mm)' and the ratio of 'L_{A}/L_{B}' was large '13.3', whereby the total heat capacity of the honeycomb catalyst (A) became excessively large, and excessively long time was required for temperature rise. In consequence, in a transient operation, time necessary for reaching a catalyst activating temperature lengthened, a gas purification ratio at this time lowered, and the evaluation of 'the purification ratio' was unacceptable 'NG'.

In Comparative Example 10, the honeycomb catalyst (A) and the honeycomb filter (B) were disposed in separate can members connected to each other via an exhaust tube, whereby a temperature of an exhaust gas flowing into the honeycomb filter (B) lowered, and a particulate matter in the honeycomb filter was not burnt and was deposited. In consequence, the pressure drop increased, and the evaluation of 'the pressure drop' was unacceptable 'NG'.

### (Comparative Example 11)

As shown in Tables 4 and 5, an exhaust gas purifying device was used and evaluations were performed in the same manner as in Example 20 except that the exhaust gas purifying device was installed with 'a distance L' of '1200 (mm)' from an engine. The results are shown in Table 5.

**[Table 4]**

| | Honeycomb catalyst (A) | | | | | | | | | Honeycomb filter (B) | | | | | | | | |
|---|---|---|---|---|---|---|---|---|---|---|---|---|---|---|---|---|---|---|
| | Outer diameter D_{A} | Length L_{A} | L_{A}/D_{A} | Cell density ρ_{A} | Partition wall thickness | Porosity | Average pore diameter | Three way catalyst coat. amount | Noble metal amount | outer diameter D_{B} | Length L_{B} | L_{B}/D_{B} | Cell density ρ_{B} | Partion wall thickness | Porosity | Average pore diameter | Oxidation catalyst coat amount | Noble metal amount |
| | (mm) | (mm) | | (cells/cm²) | (mm) | (%) | (µm) | (g/L) | (g/L) | (mm) | (mm) | | (cells/cm²) | (mm) | (%) | (µm) | (g/L) | (g/L) |
| Example 20 | 110 | 60 | 0.55 | 93.0 | 0.076 | 28.0 | 4 | 300 | 3 | 110 | 15 | 0.14 | 46.5 | 0.356 | 50.0 | 20 | 20 | 0.5 |
| Comparative Example 11 | 110 | 60 | 0.55 | 93.0 | 0.076 | 28.0 | 4 | 220 | 3 | 110 | 15 | 0.14 | 46.5 | 0.356 | 50.0 | 20 | 20 | 0.5 |

**[Table 5]**

| | L_{A}/L_{B} | L_{B}/D_{B} | Cell density ρ_{A}:ρ_{B} | Arrangement of A and B | Distance L from engine | Evaluation result | | | | General judgment |
|---|---|---|---|---|---|---|---|---|---|---|
| | | | | | | Purification ratio | PM | | Pressure drop | |
| | | | | | (mm) | | Discharge number (particles/km) | Evaluation | | |
| Example 20 | 4.0 | 0.14 | ρ_{A}>ρ_{B} | In the same can member | 600 | OK | 3x10¹¹ | OK | OK | OK |
| Comparative Example 11 | 4.0 | 0.14 | ρ_{A}>ρ_{B} | In the same can member | 1200 | NG | 5x10¹¹ | OK | NG | NG |

In Comparative Example 11, 'a distance L' was large '1200 (mm)', whereby a temperature of an exhaust gas discharged from the engine lowered before the gas reached the exhaust gas purifying device. Therefore, in a honeycomb catalyst (A), a three way catalyst required long time before reaching an activating temperature. The exhaust gas was not sufficiently purified, and passed through the honeycomb catalyst (A), and hence the evaluation of 'the purification ratio' was unacceptable 'NG'. Moreover, since the temperature of the exhaust gas lowered, a particulate matter in a honeycomb filter was not burnt and was deposited, a pressure drop increased, and the evaluation of 'the pressure drop' was unacceptable 'NG'.

An exhaust gas purifying device of the present invention is useful as an exhaust gas purifying device for a direct injection gasoline engine.

### Description of Reference Numerals

1: exhaust gas purifying device, 2: engine exhaust manifold, 3: outlet, 4: exhaust tube, 10: honeycomb catalyst, 20: honeycomb filter, 30: can member, 31: inflow port, 32: outflow port, 33: grasping material, 11 and 21: partition wall, 12 and 22: cell, 22a: inflow cell, 22b: outflow cell, 13: first honeycomb structure, 15 and 25: inflow side end face, 16 and 26: outflow side end face, 17 and 27: outer peripheral wall, 23: second honeycomb structure, 24: plugged portions, D: body portion, and L: distance L.

## Claims

1. An exhaust gas purifying device comprising:
a honeycomb catalyst including a first honeycomb structure having partition walls arranged to form a plurality of cells which extend from an inflow side end face to an outflow side end face and become through channels of an exhaust gas, and a three way catalyst loaded onto the partition walls of the first honeycomb structure;
a honeycomb filter including a second honeycomb structure having partition walls arranged to form a plurality of cells which extend from an inflow side end face to an outflow side end face and become through channels of the exhaust gas, and plugged portions arranged to alternately plug open ends of the cells of the second honeycomb structure so that the cells having the plugged open ends on an inflow side and the cells having the plugged open ends on an outflow side are alternately arranged; and
a cylindrical can member having an inflow port connected to an engine exhaust manifold on an outlet side and an outflow port through which the exhaust gas flowing into the can member through the inflow port flows out of the can member and holding the honeycomb catalyst and the honeycomb filter in an internal gas passage thereof,
wherein the honeycomb catalyst and the honeycomb filter are disposed in the can member so that the honeycomb catalyst is positioned on an inflow port side of the can member, the honeycomb filter is positioned on an outflow port side of the can member, the inflow side end face of the honeycomb catalyst faces the inflow port side of the can member and the outflow side end face of the honeycomb filter faces the outflow port side of the can member, and
a length of the honeycomb catalyst along a cell extending direction is from 2.0 to 10.0 times a length of the honeycomb filter along the cell extending direction, the length of the honeycomb filter along the cell extending direction is from 0.1 to 0.5 time an outer diameter of the honeycomb filter, and a cell density of the honeycomb catalyst is larger than that of the honeycomb filter.

2. The exhaust gas purifying device according to claim 1, wherein the honeycomb catalyst and the honeycomb filter are arranged in the can member so that a central axis of the honeycomb catalyst along the cell extending direction and a central axis of the honeycomb filter along the cell extending direction are positioned on the same straight line.

3. The exhaust gas purifying device according to claim 1 or 2, wherein the honeycomb catalyst has 100 to 400 g of the three way catalyst loaded per liter of the honeycomb catalyst, and the honeycomb filter has 0 to 60 g of an oxidation catalyst loaded per liter of the honeycomb filter.

4. The exhaust gas purifying device according to any one of claims 1 to 3, wherein the honeycomb catalyst includes the first honeycomb structure in which a thickness of the partition walls is from 0.051 to 0.102 mm and the cell density is from 62.0 to 186 cells/cm², and the honeycomb filter includes the second honeycomb structure in which a thickness of the partition walls is from 0.127 to 0.508 mm and the cell density is from 7.75 to 46.5 cells/cm².

5. The exhaust gas purifying device according to any one of claims 1 to 4, wherein the honeycomb catalyst includes the first honeycomb structure in which a porosity of the partition walls is from 20 to 50%, and the honeycomb filter includes the second honeycomb structure in which a porosity of the partition walls is from 35 to 80% and an average pore diameter of the partition walls is from 7 to 40 µm.

6. The exhaust gas purifying device according to any one of claims 1 to 5, wherein the length of the honeycomb catalyst along the cell extending direction is from 0.5 to 1.5 times the outer diameter of the honeycomb catalyst.

7. The exhaust gas purifying device according to any one of claims 1 to 6, wherein a space disposed between the honeycomb catalyst and the honeycomb filter is from 1 to 30 mm.

8. An exhaust gas purifying method comprising the steps of installing the exhaust gas purifying device according to any one of claims 1 to 7 so that a distance from an outlet of an engine exhaust manifold to the outflow side end face of the honeycomb filter disposed in the can member on a downstream side thereof is 1 m or less, to purify an exhaust gas discharged through the engine exhaust manifold.

## Patentansprüche

1. Abgasreinigungsvorrichtung, die Folgendes umfasst:
einen Wabenkatalysator, der eine erste Wabenstruktur mit Trennwänden, die so angeordnet sind, dass sie mehrere Zellen bilden, welche sich von einer Stirnfläche an der Einströmseite bis zu einer Stirnfläche an der Ausströmseite erstrecken und zu Durchströmkanälen eines Abgases werden, und einen Dreiwegekatalysator, der auf die Trennwände der ersten Wabenstruktur geladen ist, umfasst,
einen Wabenfilter, der eine zweite Wabenstruktur mit Trennwänden, welche so angeordnet sind, dass sie mehrere Zellen bilden, die sich von einer Stirnfläche an der Einströmseite bis zu einer Stirnfläche an der Ausströmseite erstrecken und zu Durchflusskanälen eines Abgases werden, und verschlossene Abschnitte, die so angeordnet sind, dass sie wechselweise die offenen Enden der Zellen der zweiten Wabenstruktur verschließen, sodass die Zellen mit den verschlossenen offenen Enden auf der Einströmseite und die Zellen mit den verschlossenen offenen Enden auf der Ausströmseite abwechselnd angeordnet sind, umfasst, und
ein zylindrisches Gehäuseelement mit einer Einströmöffnung, die mit einem Motorauspuffkrümmer an der Ausströmseite verbunden ist, und einer Ausströmöffnung, durch die das durch die Einströmöffnung in das Gehäuseelement strömende Abgas aus dem Gehäuseelement ausströmt, und das den Wabenkatalysator und den Wabenfilter in einem inneren Gaskanal davon hält,
worin der Wabenkatalysator und der Wabenfilter im Gehäuseelement so vorgesehen sind, dass der Wabenkatalysator an der Seite des Gehäuseelements mit der Einströmöffnung positioniert ist, der Wabenfilter an der Seite des Gehäuseelements mit der Ausströmöffnung positioniert ist, die Stirnfläche an der Einströmseite des Wabenkatalysators der Seite des Gehäuseelements mit der Einströmöffnung gegenüberliegt und die Stirnfläche an der Ausströmseite des Wabenkatalysators der Seite des Gehäuseelements mit der Ausströmöffnung gegenüberliegt und
die Länge des Wabenkatalysators entlang der Richtung, in die sich eine Zelle erstreckt, 2,0- bis 10,0-mal der Länge des Wabenfilters entlang der Richtung, in die sich eine Zelle erstreckt, entspricht, die Länge des Wabenfilters entlang der Richtung, in die sich eine Zelle erstreckt, 0,1- bis 0,5-mal dem Außendurchmesser des Wabenfilters entspricht und die Zellendichte des Wabenkatalysators höher ist als jene des Wabenfilters.

2. Abgasreinigungsvorrichtung nach Anspruch 1, worin der Wabenkatalysator und der Wabenfilter in dem Gehäuseelement so angeordnet sind, dass die Mittelachse des Wabenkatalysators entlang der Richtung, in die sich eine Zelle erstreckt, und die Mittelachse des Wabenfilters entlang der Richtung, in die sich eine Zelle erstreckt, auf derselben Geraden angeordnet sind.

3. Abgasreinigungsvorrichtung nach Anspruch 1 oder 2, worin der Wabenkatalysator mit 100 bis 400 g des Dreiwegekatalysators pro Liter des Wabenfilters beladen ist und der Wabenfilter mit 0 bis 60 g eines Oxidationskatalysators pro Liter des Wabenfilters beladen ist.

4. Abgasreinigungsvorrichtung nach einem der Ansprüche 1 bis 3, worin der Wabenkatalysator die erste Wabenstruktur umfasst, worin die Dicke der Trennwände 0,051 bis 0,102 mm beträgt und die Zelldichte 62,0 bis 186 Zellen/cm² beträgt, und der Wabenfilter die zweite Wabenstruktur umfasst, worin die Dicke der Trennwände 0,127 bis 0,508 mm beträgt, die Zelldichte 7,75 bis 46,5 Zellen/cm² beträgt.

5. Abgasreinigungsvorrichtung nach einem der Ansprüche 1 bis 4, worin der Wabenkatalysator die erste Wabenstruktur umfasst, worin die Porosität der Trennwände 20 bis 50 % beträgt, und der Wabenfilter die zweite Wabenstruktur umfasst, worin die Porosität der Trennwände 35 bis 80 % beträgt und der mittlere Porendurchmesser der Trennwände 7 bis 40 µm beträgt.

6. Abgasreinigungsvorrichtung nach einem der Ansprüche 1 bis 5, worin die Länge des Wabenkatalysators entlang der Richtung, in die sich eine Zelle erstreckt, 0,5- bis 1,5-mal dem Außendurchmesser des Wabenkatalysators entspricht.

7. Abgasreinigungsvorrichtung nach einem der Ansprüche 1 bis 6, worin der zwischen dem Wabenkatalysator und dem Wabenfilter vorgesehene Abstand 1 bis 30 mm beträgt.

8. Abgasreinigungsverfahren, umfassend die Schritte des Installierens einer Abgasreinigungsvorrichtung nach einem der Ansprüche 1 bis 7, sodass der Abstand vom Auslass des Motorauspuffkrümmers zur Stirnfläche an der Ausströmseite des im Gehäuseelement an der stromab gelegenen Seite vorgesehenen Wabenfilters 1 m oder weniger beträgt, um durch den Motorauspuffkrümmer abgelassenes Abgas zu reinigen.

## Revendications

1. Dispositif de purification de gaz d'échappement comprenant :
un catalyseur en nid d'abeilles comprenant une première structure en nid d'abeilles comportant des parois de séparation agencées pour former une pluralité de cellules qui s'étendent d'une face d'extrémité de côté d'entrée vers une face d'extrémité de coté de sortie et qui deviennent des canaux traversants d'un gaz d'échappement, et un catalyseur à trois fonctions chargé sur les parois de séparation de la première structure en nid d'abeilles ;
un filtre en nid d'abeilles comprenant une deuxième structure en nid d'abeilles comportant des parois de séparation agencées pour former une pluralité de cellules qui s'étendent d'une face d'extrémité de côté d'entrée vers une face d'extrémité de côté de sortie et qui deviennent des canaux traversants du gaz d'échappement, et des parties obstruées agencées pour obstruer de manière alternée les extrémités ouvertes des cellules de la deuxième structure en nid d'abeilles de sorte que les cellules ayant les extrémités ouvertes obstruées d'un côté d'entrée et les cellules ayant les extrémité ouvertes obstruées d'un côté de sortie soient agencées de manière alternée ; et
un élément formant boîte cylindrique ayant un orifice d'entrée relié à une tubulure d'échappement de moteur d'un coté de sortie et un orifice de sortie à travers lequel le gaz d'échappement entrant dans l'élément formant boîte à travers l'orifice d'entrée sort de l'élément formant boîte et contenant le catalyseur en nid d'abeilles et le filtre en nid d'abeilles dans un passage de gaz interne de celui-ci,
dans lequel le catalyseur en nid d'abeilles et le filtre en nid d'abeilles sont disposés dans l'élément formant boite de sorte que le catalyseur en nid d'abeilles soit positionné d'un côté d'orifice d'entrée de l'élément formant boîte, que le filtre en nid d'abeilles soit positionné d'un côté d'orifice de sortie de l'élément formant boîte, que la face d'extrémité de côté d'entrée du catalyseur en nid d'abeilles soit orientée vers le côté d'orifice d'entrée de l'élément formant boîte et que la face d'extrémité de côté de sortie du filtre en nid d'abeilles soit orientée vers le côté d'orifice de sortie de l'élément formant boite, et
une longueur du catalyseur en nid d'abeilles le long d'une direction d'extension des cellules est égale à 2,0 à 10,0 fois une longueur du filtre en nid d'abeilles le long de la direction d'extension des cellules, la longueur du filtre en nid d'abeilles le long de la direction d'extension des cellules est égale à 0,1 à 0,5 fois un diamètre extérieur du filtre en nid d'abeilles, et une densité de cellules du catalyseur en nid d'abeilles est supérieure à celle du filtre en nid d'abeilles.

2. Dispositif de purification de gaz d'échappement selon la revendication 1, dans lequel le catalyseur en nid d'abeilles et le filtre en nid d'abeilles sont agencés dans l'élément formant boîte de sorte qu'un axe central du catalyseur en nid d'abeilles le long de la direction d'extension des cellules et qu'un axe central du filtre en nid d'abeilles le long de la direction d'extension des cellules soient positionnés sur la même droite.

3. Dispositif de purification de gaz d'échappement selon la revendication 1 ou 2, dans lequel le catalyseur en nid d'abeilles a 100 à 400 g du catalyseur à trois fonctions chargé par litre du catalyseur en nid d'abeilles, et le filtre en nid d'abeilles a 0 à 60 g d'un catalyseur d'oxydation chargé par litre du filtre en nid d'abeilles.

4. Dispositif de purification de gaz d'échappement selon l'une quelconque des revendications 1 à 3, dans lequel le catalyseur en nid d'abeilles comprend la première structure en nid d'abeilles dans laquelle une épaisseur des parois de séparation est de 0,051 à 0,102 mm et la densité de cellules est de 62,0 à 186 cellules/cm², et le filtre en nid d'abeilles comprend la deuxième structure en nid d'abeilles dans laquelle une épaisseur des parois de séparation est de 0,127 à 0,508 mm et la densité de cellules est de 7,75 à 46,5 cellules/cm².

5. Dispositif de purification de gaz d'échappement selon l'une quelconque des revendications 1 à 4, dans lequel le catalyseur en nid d'abeilles comprend la première structure en nid d'abeilles dans laquelle une porosité des parois de séparation est de 20 à 50 %, et le filtre en nid d'abeilles comprend la deuxième structure en nid d'abeilles dans laquelle une porosité des parois de séparation est de 35 à 80 % et un diamètre de pore moyen des parois de séparation est de 7 à 40 µm.

6. Dispositif de purification de gaz d'échappement selon l'une quelconque des revendications 1 à 5, dans lequel la longueur du catalyseur en nid d'abeilles le long de la direction d'extension des cellules est égale à 0,5 à 1, 5 fois le diamètre extérieur du catalyseur en nid d'abeilles.

7. Dispositif de purification de gaz d'échappement selon l'une quelconque des revendications 1 à 6, dans lequel un espace disposé entre le catalyseur en nid d'abeilles et le filtre en nid d'abeilles est de 1 à 30 mm.

8. Procédé de purification de gaz d'échappement comprenant les étapes d'installation du dispositif de purification de gaz d'échappement selon l'une quelconque des revendications 1 à 7 de sorte qu'une distance d'une sortie d'une tubulure d'échappement de moteur jusqu'à la face d'extrémité de côté de sortie du filtre en nid d'abeilles disposé dans l'élément formant boîte d'un côté aval de celui-ci soit de 1 m ou moins, pour purifier un gaz d'échappement déchargé à travers la tubulure d'échappement de moteur.
